(19) Europäisches Patentamt
European Patent Office
Office européen des brevets

(11) EP 4 159 675 A1

(12) EUROPEAN PATENT APPLICATION
published in accordance with Art. 153(4) EPC

(43) Date of publication:
05.04.2023 Bulletin 2023/14

(51) International Patent Classification (IPC):
$C01B\ 33/029$ (2006.01)  $H01M\ 4/36$ (2006.01)
$H01M\ 4/38$ (2006.01)  $C01B\ 32/00$ (2017.01)

(21) Application number: 21812327.1

(22) Date of filing: 28.05.2021

(52) Cooperative Patent Classification (CPC):
C01B 32/00; C01B 33/029; H01M 4/36; H01M 4/38;
Y02E 60/10

(86) International application number:
PCT/JP2021/020500

(87) International publication number:
WO 2021/241751 (02.12.2021 Gazette 2021/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.05.2020 JP 2020093710

(71) Applicant: Showa Denko K.K.
Tokyo 105-8518 (JP)

(72) Inventors:
• FUJITA Masato
Tokyo 105-8518 (JP)
• ITO Yuji
Tokyo 105-8518 (JP)
• INOUE Hirofumi
Tokyo 105-8518 (JP)

(74) Representative: Strehl Schübel-Hopf & Partner
Maximilianstrasse 54
80538 München (DE)

(54) COMPOSITE PARTICLES, METHOD FOR PRODUCING SAME AND USE OF SAME

(57) An object of the present invention is to provide carbon-coated Si-C composite particles capable of maintaining a high Si utilization rate and suppressing deterioration of initial coulombic efficiency due to oxidation over time of a lithium-ion secondary battery.

The carbon-coated Si-C composite particles of the present invention includes Si-C composite particles containing a carbon material and silicon; and a carbonaceous layer present on surfaces of the Si-C composite particles, wherein the carbon coverage thereof is 70% or more, wherein the BET specific surface area is 200 m²/g or less; wherein R value ($I_D/I_G$) is 0.30 or more and 1.10 or less and $I_{Si}/I_G$ is 0.15 or less, when the peak attributed to Si is present at 450 to 495 cm$^{-1}$ and the intensity of the peak is defined as $I_{Si}$, in Raman spectrum of the carbon-coated Si-C composite particles: and wherein the full width at half maximum of the peak of a 111 plane of Si is 3.00 deg. or more, and (peak intensity of a 111 plane of SiC)/(peak intensity of the 111 plane of Si) is 0.01 or less, in the XRD pattern measured by powder XRD using a Cu-K$\alpha$ ray of the carbon-coated Si-C composite particles.

[Fig. 1]

(a)

(b)

EP 4 159 675 A1

**Description**

BACKGROUND OF THE INVENTION

Technical Field

The present invention relates to composite particles, a method for producing the same, and uses thereof.

Background Art

Secondary batteries used in IT devices such as smartphones and tablet PCs, vacuum cleaners, electric tools, electric bicycles, drones, and automobiles require negative electrode active materials with high capacity and high power. Silicon (theoretical specific capacity: 4200 mAh/g), which has a higher theoretical specific capacity than currently used graphite (theoretical specific capacity: 372 mAh/g), has attracted attention as a negative electrode active material.

However, silicon (Si) expands and contracts in volume up to about 3 to 4 times in association with electrochemical insertion and deinsertion of lithium. As a result, the silicon particles collapse or are separated from the electrode, and thus it is known that the lithium-ion secondary battery using silicon has extremely low cycle characteristics. For this reason, instead of simply replacing graphite with silicon, it is now being actively studied to use a structure in which the degree of expansion and contraction of the negative electrode material as a whole is reduced. Among them, many attempts have been made to form a composite with carbonaceous materials.

As a negative electrode material having a high capacity and a long life, for example, Patent Literature 1 discloses a silicon-carbon composite material (Si-C composite material) obtained by a method in which porous carbon particles are brought into contact with a silane gas at a high temperature to generate silicon in the pores of the porous carbon. Patent Literature 1 further discloses a material obtained by further coating the Si-C composite material with a carbonaceous layer by a chemical vapor deposition (CVD) method.

Citation List

Patent Literature

Patent Literature 1: JP2018-534720A

Summary of Invention

Technical Problem

When a material in which a carbonaceous layer is coated on a Si-C composite material as disclosed in Patent Literature 1 is used as a negative electrode active material, according to the studies by the present inventors, in a case where the Si-C composite material was coated with a carbonaceous layer at a low temperature, the carbon coverage was low and the exposure of surface Si was not suppressed, the Si-C composite material was oxidized over time and the initial efficiency was lowered, and in a case where the Si-C composite material was coated with a carbonaceous layer at a high temperature, the Si utilization rate of the lithium-ion secondary battery decreased due to the generation of silicon carbide (Si-C) on the high temperature side.

An object of the present invention is to provide carbon-coated Si-C composite particles capable of achieving both a high Si utilization rate of a lithium-ion secondary battery and suppressing deterioration of initial coulombic efficiency due to oxidation over time.

Patent Literature 1 does not discuss the carbonaceous nature related to the carbon coating. In Patent Literature 1, there is a description about an experimental example on the low temperature side, but the effect is not described and is unclear. In order to form a high-quality carbonaceous layer, it is generally necessary to perform a carbon CVD method at a high temperature.

On the other hand, it is considered that silicon carbide (SiC) is generated when the carbon and silicon are exposed to high temperatures and are brought in contact with each other. Since insertion and deinsertion reactions of lithium do not occur in silicon carbide, an increase in the proportion of silicon carbide in the negative electrode active material leads to a decrease in the specific capacity of the negative electrode active material.

Solution to Problem

The present inventors have studied the temperature and carbon source when performing the carbon CVD method in order to suppress the generation of SiC and to obtain a high-quality carbonaceous layer. As a result, the present inventors have found novel carbon-coated Si-C composite particles by finding out conditions for a carbon CVD method where the initial coulombic efficiency of a lithium-ion secondary battery is high even after the carbon-coated Si-C composite particles are stored for two months because the quality of the carbonaceous layer is good, and where the Si utilization rate of the battery increases because SiC is not generated, thereby completing the present invention.

That is, the present invention comprises, for example, the following configurations.

[1] Carbon-coated Si-C composite particles comprising:

Si-C composite particles containing a carbon material and silicon; and
a carbonaceous layer present on surfaces of the Si-C composite particles,
wherein a coverage (carbon coverage) by the carbonaceous layer on the surfaces of the Si-C composite particles is 70% or more,
wherein a BET specific surface area is 200 $m^2$/g or less;
wherein R value ($I_D/I_G$) is 0.30 or more and 1.10 or less, and $I_{Si}/I_G$ is 0.15 or less when a peak attributed to Si is present at 450 to 495 $cm^{-1}$ and an intensity of the peak is defined as $I_{Si}$, in a Raman spectrum of the carbon-coated Si-C composite particles; and
wherein a full width at half maximum of a peak of a 111 plane of Si is 3.00 deg. or more, and (peak intensity of a 111 plane of SiC)/(peak intensity of the 111 plane of Si) is 0.01 or less, in a XRD pattern measured by powder XRD using a Cu-K$\alpha$ ray of the carbon-coated Si-C composite particles.

[2] The carbon-coated Si-C composite particles according to [1], wherein a true density as measured by a He pycnometer is 2.00 to 2.20 $g/cm^3$.

[3] The carbon-coated Si-C composite particles according to [1] or [2], wherein a 50% particle size $D_{V50}$ in a volume-based cumulative particle size distribution is 2.0 to 30.0 $\mu$m.

[4] The carbon-coated Si-C composite particles according to any one of [1] to [3], wherein a content of silicon is 20 to 70% by mass.

[5] The carbon-coated Si-C composite particles according to any one of [1] to [4], wherein an oxygen content is 10.0% by mass or less.

[6] The carbon-coated Si-C composite particles according to any one of [1] to [5], wherein an oxygen content is 4.0% by mass or less.

[7] The carbon-coated Si-C composite particles according to any one of [1] to [6], wherein the carbonaceous layer has an average thickness of 5 to 100 nm.

[8] The carbon-coated Si-C composite particles according to any one of [1] to [7], wherein R value ($I_D/I_G$) is 0.30 or more and less than 1.00.

[9] The carbon-coated Si-C composite particles according to any one of [1] to [8], wherein a BET specific surface area is 6.0 $m^2$/g or less.

[10] The carbon-coated Si-C composite particles according to any one of [1] to [8], wherein a BET specific surface area is 5.0 to 200.0 $m^2$/g.

[11] A polymer-coated carbon-coated Si-C composite particles comprising:

a polymer coating layer on at least a part of the surfaces of the carbon-coated Si-C composite particles according to any one of [1] to [10],
wherein the polymer coating layer comprises inorganic particles comprising one or more selected from graphite and carbon black and a polymer, and a polymer content is 0.1 to 10.0% by mass.

[12] A method for producing carbon-coated Si-C composite particles comprising:

a step (A) of allowing a silicon-containing gas to act on porous carbon to precipitate silicon in pores and on a surface of the porous carbon to obtain Si-C composite particles; and
a step (B) of forming a carbonaceous layer on surfaces of the Si-C composite particles by a chemical vapor deposition (CVD) method at 600 to 750°C using at least one selected from acetylene and ethylene as a carbon source.

[13] The method for producing carbon-coated Si-C composite particles according to [12], wherein the step (A) and the step (B) are continuously performed.

[14] The method for producing carbon-coated Si-C composite particles according to [12] or [13], wherein the carbon-coated Si-C composite particles according to any one of [1] to [10] are produced.

[15] A negative electrode mixture layer comprising the carbon-coated Si-C composite particles according to any one of [1] to [10].

[16] A negative electrode mixture layer comprising the polymer-coated carbon-coated Si-C composite particles according to [11].

[17] A lithium-ion secondary battery comprising the negative electrode mixture layer according to [15] or [16].

Advantageous Effects of Invention

According to the carbon-coated Si-C composite particles of the present invention, it is possible to provide a lithium-ion secondary battery which has a high Si utilization rate and which can maintain a high initial coulombic efficiency even after being stored in air for two months. Further, since the Si-C composite particles are coated with carbon, oxidation of silicon can be prevented, and thus a negative electrode material for a lithium-ion secondary battery having excellent oxidation resistance can be provided.

Brief Description of Drawings

[Figure 1] Figure 1(a) is a Raman spectrum of carbon-coated Si-C composite particles of Example 1 and Figure 1(b) is a Raman spectrum of Si-C composite particles not coated with carbon of Comparative Example 2.

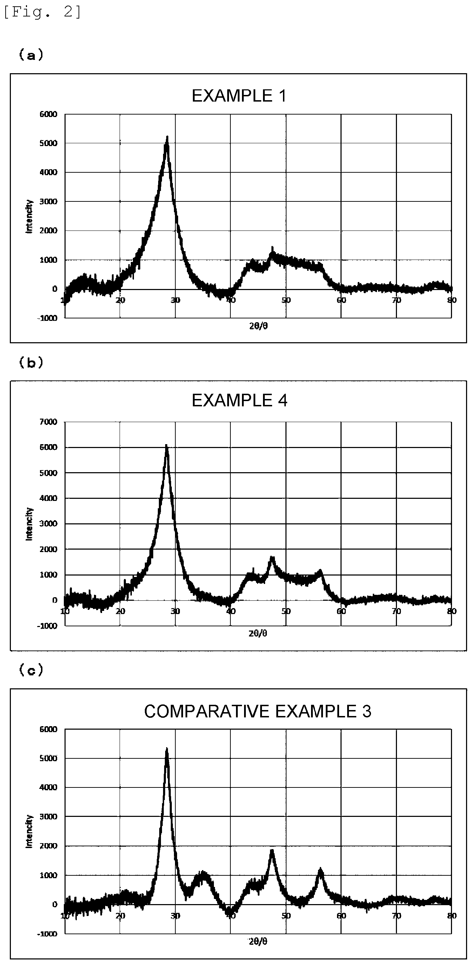

[Figure 2] Figure 2(a) is an XRD pattern of the carbon-coated Si-C composite particles of Example 1, Figure 2(b) is an XRD pattern of carbon-coated Si-C composite particles of Example 4, and Figure 2(c) is an XRD pattern of carbon-coated Si-C composite particles of Comparative Example 3.

[Figure 3] Figure 3 is a cross-sectional SEM photograph of the carbon-coated Si-C composite particles of Example 1.

[Figure 4] Figure 4 is a cross-sectional SEM photograph of the carbon-coated Si-C composite particles of Example 1.

Description of Embodiments

Next, the present invention will be specifically described. In the present invention, "peak intensity" means "peak height".

[1] Carbon-coated Si-C composite particles

In carbon-coated Si-C composite particles according to the present invention, a carbonaceous layer is present on at least a part of surfaces of the Si-C composite particles containing a carbon material and silicon.

The Si-C composite particles are composite particles containing a carbon material and silicon, and are usually composite particles in which silicon (Si) is precipitated on a surface and in pores of the carbon material. The Si-C composite particles can usually be obtained by, for example, precipitating amorphous Si on porous carbon by a chemical vapor deposition (CVD) method using a silicon source such as silane ($SiH_4$).

The carbon-coated Si-C composite particles according to the present invention have a structure in which at least a part of surfaces of the Si-C composite particle is covered with a carbonaceous layer. The carbon-coated Si-C composite particles can be obtained from the Si-C composite particles by, for example, a chemical vapor deposition (CVD) method (C-CVD method) using a carbon source described below. The carbon-coated Si-C composite particles according to the present invention may be in an aspect in which there are substantially no voids (pores) or may be in an aspect in which there are voids (pores). Here, examples of the aspect in which there are substantially no voids (pores) include an aspect in which the pores of the Si-C composite particles are substantially completely filled with a carbon source. Further, examples of the aspect in which there are voids (pores) include an aspect in which the entire volume of the pores is not filled with carbon even when a carbon coating layer is formed on, for example, the surface in the pores of the Si-C composite particles by, for example, the C-CVD method, and an aspect in which there are pores not coated with carbon. In any case, the carbon-coated Si-C composite particles according to the present invention are suitable for applications such as a negative electrode material because oxidation of silicon is suppressed by coating the Si-C composite particles with carbon.

In the carbon-coated Si-C composite particles, R value ($I_D/I_G$), which is a ratio of the intensity $I_D$ of the D band (peak intensity in the vicinity of 1360 cm$^{-1}$) to the intensity $I_G$ of the G band (peak intensity in the vicinity of 1600 cm$^{-1}$) in the Raman spectra thereof, is 0.30 or more and 1.10 or less. When R value is 0.30 or more, the reaction resistance is sufficiently low, which leads to an improvement in the rate characteristics of the battery. On the other hand, an R value of 1.10 or less means that there are few defects in the carbonaceous layer. When R value is 1.10 or less, side reactions are reduced, and thus the coulombic efficiency is improved. From the same viewpoint, R value is preferably 0.50 or more, and more preferably 0.70 or more.

In an aspect of the carbon-coated Si-C composite particles according to the present invention, R value is preferably less than 1.00, more preferably 0.98 or less, and still more preferably 0.95 or less. In particular, in the case of an aspect in which the carbon-coated Si-C composite particles do not substantially have voids (pores), it is preferable that such an R value is satisfied.

In the carbon-coated Si-C composite particles, a peak attributed to Si (silicon) in the Raman spectrum is present at 450 to 495 cm$^{-1}$. The intensity of the peak appearing at 450 to 495 cm$^{-1}$ attributed to silicon is defined as $I_{Si}$. Usually, crystalline Si (silicon) has a peak in the vicinity of 520 cm$^{-1}$, whereas amorphous silicon has a peak at a lower Raman shift. That is, the carbon-coated Si-C composite particles have amorphous silicon. When silicon is highly amorphous characteristic, expansion and contraction are relatively isotropic during charging and discharging, which can improve the cycle characteristics. As the wavenumber increases, the amorphous characteristic decreases and the crystallinity increases, which deteriorates cycle characteristics.

In the carbon-coated Si-C composite particles, the ratio of the peak intensity $I_{Si}$ attributed to the silicon to the intensity $I_G$ of the G band according to the Raman spectrum, $I_{Si}/I_G$, is 0.15 or less. The appearance of the silicon peak in the Raman spectrum indicates that silicon is deposited in the vicinity of the surface of the carbon-coated Si-C composite particles. When this value is within the above range, it indicates that the amount of silicon precipitated on the surface of the porous carbon is small and that the amount of silicon in the pores of carbon near the surface of the carbon-coated Si-C composite particles is small. This leads to an improvement in cycle characteristics in that the proportion of silicon in direct contact with the electrolytic solution is reduced. $I_{Si}/I_G$ is preferably 0.12 or less, and more preferably 0.10 or less. The lower limit of $I_{Si}/I_G$ is not particularly limited, and is usually 0, preferably 0.001.

In the carbon-coated Si-C composite particles, in the XRD pattern measured by powder XRD using a Cu-Kα ray, the full width at half maximum of the peak of the 111 plane of Si is 3.00 deg. or more. When the full width at half maximum of the peak of the 111 plane of Si is 3.00 deg. or more, the crystallite becomes small, which leads to suppression of destruction of the silicon region in association with charging and discharging. From the same viewpoint, the full width at half maximum is preferably 3.10 deg. or more, more preferably 3.20 deg. or more, and still more preferably 4.50 deg. or more. Also, the full width at half maximum is preferably 10.00 deg. or less, more preferably 7.00 deg. or less, and still more preferably 5.85 deg. or less.

In the carbon-coated Si-C composite particles, in the XRD pattern measured by powder XRD using a Cu-Kα ray, (peak intensity of 111 plane of SiC)/(peak intensity of 111 plane of Si) is 0.01 or less. When the above ratio is 0.01 or less, since SiC (silicon carbide) is not contained in the carbon-coated Si-C composite particles or the content of SiC is extremely low, the utilization rate of silicon as a battery active material is improved. The (peak intensity of 111 plane of SiC)/(peak intensity of 111 plane of Si) is also defined as $I_{SiC111}/I_{Si111}$. The lower limit of $I_{SiC111}/I_{Si111}$ is 0. That is, it is preferable that the peak intensity of SiC is not observed. The peak intensity of SiC means a peak appearing in the vicinity of 35° at 2θ derived from SiC. Further, the peak intensity of Si means a peak appearing in the vicinity of 28° at 2θ derived from Si.

In the carbon-coated Si-C composite particles, the true density as measured by a He pycnometer is preferably 2.00 to 2.20 g/cm$^3$, and more preferably 2.03 to 2.18 g/cm$^3$. When the true density is in the above range, it is preferable that the carbon-coated Si-C composite particles are used as a negative electrode material such as a negative electrode mixture layer of a lithium-ion battery, because the problem that the capacity for charging with a large current rapidly decreases can be suppressed.

The true density can be measured by the gas phase replacement method. The gas phase replacement method is a method to calculate the true density from the volume of helium gas in a predefined volume in an environment maintained at a constant temperature. As an apparatus for the gas phase replacement method, for example, AccuPycII 1340 Gas Pycnometer manufactured by Micromeritics Instrument Corporation.

In the carbon-coated Si-C composite particles, the 50% particle size $D_{V50}$ in a volume-based cumulative particle size distribution is preferably 2.0 to 30.0 um. $D_{V50}$ can be measured by laser diffraction method. When $D_{V50}$ of the composite particles is 2.0 um or more, the powder of the carbon-coated Si-C composite particles is excellent in handleability, a slurry having a viscosity and a density suitable for coating is easily prepared, and the density of the electrode is easily increased. From this viewpoint, $D_{V50}$ is more preferably 3.0 um or more, and still more preferably 4.0 um or more.

When $D_{V50}$ of the carbon-coated Si-C composite particles is 30.0 um or less, the diffusion length of lithium in each particle is short, and thus the rate characteristics of a lithium-ion battery are excellent, and in addition, stripping or abnormal unevenness does not occur when the slurry is applied to a current collector. From this viewpoint, $D_{V50}$ is more preferably 25.0 um or less, and still more preferably 20.0 um or less.

In the carbon-coated Si-C composite particles, the content of silicon (Si element) is preferably 20 to 70% by mass. When the content of silicon is 20% by mass or more, it is theoretically possible to obtain a specific capacity of approximately 840 mAh/g or more, which greatly exceeds the theoretical specific capacity of graphite. From this viewpoint, the content is more preferably 30% by mass or more, and still more preferably 40% by mass or more.

When the content of silicon in the carbon-coated Si-C composite particles is 70% by mass or less, the carbon material serving as a carrier, preferably a carbon material derived from porous carbon, can absorb volume change due to expansion and contraction. From this viewpoint, the content is more preferably 65% by mass or less, and still more preferably 60% by mass or less.

The content of silicon in the carbon-coated Si-C composite particles can be determined by subjecting the composite particles to X-ray fluorescence analysis using, for example, a fundamental parameter method (FP method). It is also possible to determine the contents by, for example, inductively coupled plasma emission spectrometry (ICP-AES) after burning the carbon-coated Si-C composite particles to remove carbon and completely dissolving the burnt ash in an acid or alkali.

In the carbon-coated Si-C composite particles, the oxygen content is preferably 10.0% by mass or less. When the oxygen content of the composite particles is 10.0% by mass or less, the irreversible capacity of the negative electrode material for the lithium-ion secondary battery can be reduced. From the same viewpoint, the oxygen content is preferably 9.0% by mass or less, and more preferably 8.0% by mass or less. The lower limit of the oxygen content is not particularly limited, but is preferably 0.0% by mass, and more preferably 0.5% by mass. Since Si is coated with carbon in the carbon-coated Si-C composite particles, it is difficult to be oxidized over time, and the oxygen content can be maintained low.

Further, in an aspect of the carbon-coated Si-C composite particles according to the present invention, the oxygen content is also preferably 4.0% by mass or less, and also more preferably 3.8% by mass or less. In particular, in the case of an aspect in which the carbon-coated Si-C composite particles have voids (pores), it is preferable that such an oxygen content is satisfied. In the present invention, the oxygen content of carbon-coated Si-C composite particles refers to the oxygen content of carbon-coated Si-C composite particles stored within two days after production or in a non-oxidizing atmosphere, unless otherwise specified. In the case where the measurement cannot be performed within two days after the production due to, for example, the convenience of the process, the composite particles may be stored under an inert atmosphere such as argon, and even if the measurement is performed at a later date, the value may be regarded as the same as that within two days after the production. This is because oxidation does not proceed when stored in an inert atmosphere.

The oxygen content in the carbon-coated Si-C composite particles can be measured by, for example, an oxygen-nitrogen simultaneous measuring apparatus.

In the carbon-coated Si-C composite particles, the coverage (carbon coverage) by the carbonaceous layer on the surfaces of the Si-C composite particles is 70% or more. When most of the surface of the Si-C composite particles are covered with a carbonaceous material, oxidation of silicon can be prevented, and thus the carbon-coated Si-C composite particles can be used as a negative electrode material for a lithium-ion secondary battery having excellent oxidation resistance. The carbon coverage is preferably 80% or more. The upper limit of the carbon coverage is 100%.

The carbon coverage can be measured from a cross-sectional SEM photograph or a cross-sectional TEM photograph of the carbon-coated Si-C composite particles. Specifically, for example, the particle outer peripheral length of the Si-C composite particles and the length of the carbonaceous layer covering the Si-C composite particles are calculated from the cross-sectional SEM photograph or the cross-sectional TEM photograph, and the carbon coverage can be calculated from the ratio of the two. Further, the ratio of the portion of the surfaces of the carbon-coated Si-C composite particles having a higher carbon concentration than the inside can be determined as the carbon coverage. For example, in the cross-sectional SEM-EDS of a particle, the carbon concentration between the center point and the measurement point of the particle surface is measured at 10 points on the outer periphery obtained by dividing the cross-sectional outer periphery into 10 at equal intervals as measurement point of the particle surface, and it can be confirmed that the carbon coverage is 70% or more by the presence of 7 or more points having a higher carbon concentration than the center point among the measurement points on the particle surface. Such an analysis can be performed not only from a cross-sectional SEM but also from a cross-sectional TEM, and is effective in a case where the carbon-coated Si-C composite particles have a fine structure such as voids (pores) and it is difficult to measure the length from the cross-sectional SEM photograph.

In an aspect of the carbon-coated Si-C composite particles according to the present invention, the average thickness of the carbonaceous layer is 5 to 100 nm. In particular, in the case of an aspect in which the carbon-coated Si-C composite particles do not substantially have voids (pores) and in a case where the carbon coverage of the carbon-coated Si-C composite particles is 70% or more, such an average thickness is preferred.

When the average thickness of the carbonaceous layer is 5 nm or more, the Si-carbon composite particles can be completely coated, so that a battery having high initial coulombic efficiency can be obtained. On the other hand, when the average thickness of the carbonaceous layer is 100 nm or less, the diffusion distance of lithium is small, so that a battery having good rate characteristics can be obtained. From the same viewpoint, the average thickness of the carbonaceous layer is preferably 7 nm or more, more preferably 10 nm or more, and still more preferably 15 nm or more. The average thickness of the carbonaceous layer is preferably 90 nm or less, more preferably 80 nm or less.

The average thickness of the carbonaceous layer of the carbon-coated Si-C composite particles can be measured from the cross-sectional SEM photograph of the carbon-coated Si-C composite particles.

In an aspect of the carbon-coated Si-C composite particles according to the present invention, it is also preferable that the average thickness of the carbonaceous layer is 5 to 100 nm, and the coverage (carbon coverage) by the carbonaceous layer on the surfaces of the Si-C composite particles is 70% or more. Since such a carbon-coated Si-C composite particles have a carbonaceous layer having a sufficient thickness on most of the particle surface, exposure of surface Si is highly suppressed, contact between silicon (Si) and the outside is particularly small, and oxidation over time can be suppressed. Therefore, when such carbon-coated Si-C composite particles are used as a negative electrode active material, for example, the deterioration of the initial coulombic efficiency can be particularly suitably suppressed.

The carbon-coated Si-C composite particles according to the present invention have a BET specific surface area of 200 m$^2$/g or less. In a case where the carbon-coated Si-C composite particles have a sufficient carbonaceous layer on the surface, the BET specific surface area is usually 200 m$^2$/g or less.

In an aspect of the carbon-coated Si-C composite particles according to the present invention, the BET specific surface area is preferably 6.0 m$^2$/g or less. In particular, in the case of an aspect in which the carbon-coated Si-C composite particles do not substantially have voids (pores), such a BET specific surface area is preferred. When the BET specific surface area is 6.0 m$^2$/g or less, it is preferable because the decomposition reaction of the electrolytic solution, which is a side reaction, is unlikely to occur. From this viewpoint, the BET specific surface area of the carbon-coated Si-C composite particles is more preferably 5.5 m$^2$/g or less, and still more preferably 5.0 m$^2$/g or less. The absorption gas when measuring the BET specific surface area is nitrogen. The lower limit of the BET specific surface area of the carbon-coated Si-C composite particles is usually 0.5 m$^2$/g, preferably 1.0 m$^2$/g.

Further, in an aspect of the carbon-coated Si-C composite particles according to the present invention, the BET specific surface area is preferably 5.0 to 200.0 m$^2$/g. In particular, in the case of an aspect in which the carbon-coated Si-C composite particles have voids (pores), such a BET specific surface area is preferred. In this case, the BET specific surface area of the carbon-coated Si-C composite particles is more preferably 6.5 m$^2$/g or more, still more preferably 8 m$^2$/g or more, and more preferably 180.0 m$^2$/g or less, still more preferably 170.0 m$^2$/g or less. The carbon-coated Si-C composite particles of an aspect of the present invention has such a BET specific surface area, and even in the aspect in which there are voids (pores), oxidation of silicon can be prevented by the presence of a carbonaceous layer on the surface, for example, inside the pores. Further, since the amount of Si exposed on the surface is small and Si is coated with a carbonaceous substance, the reaction due to direct contact between Si and the electrolytic solution can be suppressed, and it can be suitably used as a negative electrode material, for example. Further, in a case of an aspect in which the carbon-coated Si-C composite particles according to the present invention have voids (pores), the expansion of the Si-C composite particles can be suppressed.

[2] Polymer-coated carbon-coated Si-C composite particles

The composite particles according to the present invention may be a polymer-coated carbon-coated Si-C composite particles having a polymer coating layer on at least a part of surfaces of the carbon-coated Si-C composite particles described in [1] above. The polymer-coated carbon-coated Si-C composite particles according to the present invention are composite particles having a polymer coating layer on at least a part of surfaces of the carbon-coated SiC composite particles, that is, composite particles further having a polymer coating layer on the carbonaceous layer of the carbon-coated Si-C composite particles.

The polymer coating layer contains inorganic particles containing one or more selected from graphite and carbon black and a polymer, in which the polymer content is 0.1 to 10.0% by mass.

By containing the inorganic particles acting as a conductive additive (conductive auxiliary agent), the polymer coating layer can impart a conductive protrusion structure to the surface of the composite particles. For this reason, when the polymer-coated carbon-coated Si-C composite particles of the present invention are used in the negative electrode mixture layer, electrical conduction between adjacent negative electrode materials is easily achieved even when the composite particles expand and contract. Further, the resistance value of the entire negative electrode material can be reduced.

(Inorganic particles)

The inorganic particles contained in the polymer coating layer contains one or more selected from graphite and carbon black, and are usually conductive particles.

The content of the inorganic particles is preferably 1.0% by mass to 10.0% by mass, more preferably 2.0% by mass to 9.0% by mass, more preferably 3.0% by mass to 8.0% by mass in the polymer-coated carbon-coated Si-C composite particles from the viewpoint of improving the cycle characteristics.

The particle size of the inorganic particles is preferably 1/2 or less of that of the polymer-coated carbon-coated Si-C composite particles. This is because the inorganic particles are likely to be present on the surface of the carbon-coated Si-C composite particles.

The particle size of the inorganic particles can be measured by observing the polymer-coated carbon-coated Si-C composite particles with a scanning electron microscope (SEM).

For example, the inorganic particles are preferably at least one selected from the group consisting of granular graphite and carbon black, and granular graphite is preferable from the viewpoint of improving cycle characteristics. Examples of granular graphite include particles such as artificial graphite, natural graphite, and mesophase carbon (MC). Examples of carbon black include acetylene black, ketjen black, thermal black, and furnace black, and acetylene black is preferable from the viewpoint of conductivity.

Granular graphite is preferably more crystalline than carbon present on the surface of carbon-coated Si-C composite particles from the viewpoint of improving both battery capacity and charge/discharge efficiency. Specifically, the value of the average interplanar spacing ($d_{002}$) obtained by measuring the granular graphite based on the Gakushin method is preferably 0.335 nm to 0.347 nm, more preferably 0.335 nm to 0.345 nm, still more preferably 0.335 nm to 0.340 nm, and particularly preferably 0.335 nm to 0.337 nm. When the average interplanar spacing of the granular graphite is 0.347 nm or less, the crystallinity of the granular graphite is high, and both the battery capacity and the charge/discharge efficiency tend to be improved. On the other hand, since the theoretical value of the graphite crystal is 0.335 nm, when the average interplanar spacing of the granular graphite is close to this value, both the battery capacity and the charge/discharge efficiency tend to be improved.

The shape of the granular graphite is not particularly limited, and may be flat graphite or spherical graphite. From the viewpoint of improving cycle characteristics, flat graphite is preferable.

In the present disclosure, the flat graphite means graphite having an average aspect ratio of other than 1, that is, graphite having a short axis and a long axis. Examples of the flat graphite include graphite having a shape of, for example, a scale, a flake, and a lump.

The aspect ratio of the inorganic particles is not particularly limited, but the average aspect ratio is preferably 0.3 or less, and more preferably 0.2 or less, from the viewpoint of easily ensuring conduction between the inorganic particles and improving the cycle characteristics. The average aspect ratio of the inorganic particles is preferably 0.001 or more, more preferably 0.01 or more.

The aspect ratio of the inorganic particles is a value measured by observation by SEM. Specifically, the value is calculated as B/A when the length in the major axis direction is A and the length in the minor axis direction (the length in the thickness direction in the case of flat graphite) is B for each of 100 inorganic particles arbitrarily selected in the SEM image. The average aspect ratio is an arithmetic mean value of the aspect ratios of 100 inorganic particles.

The inorganic particles may be either primary particles (single particles) or secondary particles (granulated particles) formed from a plurality of primary particles. Further, the flat graphite may be porous graphite particles.

(Polymer)

The polymer-coated carbon-coated Si-C composite particles contains a polymer coating layer present on at least a part of the surfaces of the carbon-coated Si-C composite particles, wherein the polymer coating layer contains a polymer.

The content of the polymer in the polymer-coated carbon-coated Si-C composite particles is 0.1% by mass or more. When the content is 0.1% by mass or more, the cycle durability of the battery can be improved. From this viewpoint, the content of polymer is preferably 0.2% by mass or more, and more preferably 0.3% by mass or more.

Further, the content of the polymer in the polymer-coated carbon-coated Si-C composite particles is 10.0% by mass or less. When the content is 10.0% by mass or less, the decrease in conductivity of the polymer-coated carbon-coated Si-C composite particles is small, and the rate characteristics of the battery can be improved. From this viewpoint, the content of the polymer in the polymer-coated carbon-coated Si-C composite particles is preferably 7.0% by mass or less, and more preferably 5.0% by mass or less.

The content of the polymer in the polymer-coated carbon-coated Si-C composite material can be confirmed by, for example, heating sufficiently dried polymer-coated carbon-coated Si-C composite material to a temperature (for example, 300°C) equal to or higher than a temperature at which the polymer decomposes and lower than a temperature at which the carbon-coated Si-C composite particles and the inorganic particles decompose, and measuring the mass of the polymer-coated carbon-coated Si-C composite material after the polymer decomposes. Specifically, when the mass of the polymer-coated carbon-coated Si-C composite material before heating is A g and the mass of the polymer-coated carbon-coated Si-C composite material after heating is B g, (A-B) is the content of the polymer. Therefore, the content of the polymer can be calculated as $\{(A-B)/A\} \times 100$.

The measurement of the polymer content can also be carried out by using thermogravimetry (TG). This is preferable because the amount of sample required for measurement is small and measurement can be performed with high accuracy.

The type of polymer is not particularly limited. Examples thereof include at least one selected from the group consisting of polysaccharides, cellulose derivatives, animal water-soluble polymers, lignin derivatives, and water-soluble synthetic polymers.

Specific examples of the polysaccharide include starch derivatives such as starch acetate, starch phosphate, carboxymethyl starch, and hydroxyalkyl starches such as hydroxyethyl starch, dextrin, dextrin derivatives, cyclodextrin, alginic acid, alginic acid derivatives, sodium alginate, agarose, carrageenan, xyloglucan, glycogen, tamarind seed gum, pullulan, and pectin.

Examples of the cellulose derivative include carboxymethyl cellulose, methyl cellulose, hydroxyethyl cellulose, and hydroxypropyl cellulose.

Examples of the animal water-soluble polymer include casein and gelatin.

Examples of the water-soluble synthetic polymer include water-soluble acrylic polymers, water-soluble epoxy polymers, water-soluble polyesters, water-soluble polyamides, and water-soluble polyethers, and more specific examples thereof include polyvinyl alcohol, polyacrylic acid, polyacrylate, polyvinyl sulfonic acid, polyvinyl sulfonate, poly(4-vinylphenol), poly(4-vinylphenol) salt, polystyrene sulfonic acid, polystyrene sulfonate, polyaniline sulfonic acid, polyacrylamide, polyvinylpyrrolidone, and polyethylene glycol. The polymer may be used in the form of, for example, a metal salt and an alkylene glycol ester.

The polymer preferably contains one or more selected from the group consisting of polysaccharides, cellulose derivatives, gelatin, casein, and water-soluble polyethers as the first component, and one or more selected from the group consisting of monosaccharides, disaccharides, oligosaccharides, amino acids, gallic acid, tannin, saccharin, saccharin salts and butynediol as the second component. In the present invention, the polysaccharide means a compound having a structure in which 10 or more monosaccharide molecules are bonded, and the oligosaccharide means a compound having a structure in which 3 to 10 monosaccharide molecules are bonded. In the present invention, these second components are also treated as a polymer.

Specific examples of the polysaccharide include the polysaccharides described above.

Specific examples of the cellulose derivative include the cellulose derivatives described above.

Specific examples of the water-soluble polyether include polyalkylene glycols such as polyethylene glycol.

Specific examples of the monosaccharide include arabinose, glucose, mannose, and galactose.

Specific examples of the disaccharide include sucrose, maltose, lactose, cellobiose, and trehalose.

Specific examples of the oligosaccharide include raffinose, stachyose, and maltotriose.

Specific examples of the amino acid include glycine, alanine, valine, leucine, isoleucine, serine, threonine, cysteine, cystine, methionine, aspartic acid, glutamic acid, lysine, arginine, phenylalanine, tyrosine, histidine, tryptophan, proline, oxyproline, and glycylglycine.

Specific examples of the tannin include tea catechin and persimmon catechin.

The first component preferably contains at least one polysaccharide, more preferably at least one selected from the group consisting of starch, dextrin, and pullulan. The first component is present so as to coat at least a part of the surface of the polymer-coated carbon-coated Si-C composite material, so that the reaction between the polymer-coated carbon-coated Si-C composite material and the electrolytic solution is suppressed in the battery, which can improve the cycle performance.

The second component preferably contains at least one selected from the group consisting of disaccharides and monosaccharides, and more preferably contains at least one selected from the group consisting of maltose, lactose, trehalose, and glucose. It is considered that the second component is incorporated into the first component and suppresses the solubility of the precipitate film formed from the first component in water or the electrolytic solution. By using the first component and the second component in combination, the surface of the carbon-coated Si-C composite material can be strongly adhered to each other, and the binding force of the inorganic particles can be improved. Therefore, the cycle performance of the battery can be improved.

From the above viewpoint, in a case where the polymer contains the first component and the second component, the mass ratio thereof (first component : second component) is preferably 1:1 to 25:1, more preferably 3:1 to 20:1, and still more preferably 5:1 to 15:1.

(Production method)

The method of allowing the polymer to be present on at least a part of surfaces of the carbon-coated Si-C composite particles is not particularly limited. For example, the carbon-coated Si-C composite particles may be added to a liquid in which the polymer is dissolved or dispersed, followed by stirring as necessary, so that the polymer adheres to the carbon-coated Si-C composite particles. Thereafter, the carbon-coated Si-C composite particles to which the polymer is adhered are taken out of the liquid and dried as necessary, thereby enabling to obtain the carbon-coated Si-C composite particles to which the polymer is adhered on the surface.

The temperature of the solution or dispersion (hereinafter, also collectively referred to as a solution) during stirring is not particularly limited, and can be selected from, for example, 5°C to 95°C. In a case where the solution is heated, the concentration of the solution may change due to distillation of the solvent or dispersion medium (hereinafter, also collectively referred to as a solvent) used in the solution. To avoid this, it is necessary to prepare the solution in a closed vessel or to reflux the solvent. As long as the polymer can be uniformly present on at least a part of surfaces of the carbon-coated Si-C composite particles, the treatment may be performed while distilling off the solvent. The stirring atmosphere is not particularly limited as long as the performance of the polymer-coated carbon-coated Si-C composite particles is not impaired.

The temperature during drying is not particularly limited as long as the polymer is not decomposed and distilled off, and can be selected from, for example, 50°C to 200°C. Drying in an inert atmosphere or under vacuum may be carried out.

The content of the polymer in the solution is not particularly limited and can be selected from, for example, 0.1% by mass to 20% by mass.

The solvent used for the solution is not particularly limited as long as it is a solvent capable of dissolving or dispersing the polymer and the precursor of the polymer. Examples thereof include those used as solvents such as water, acetonitrile, alcohols such as methanol, ethanol, and 2-propanol, ketones such as acetone and methyl ethyl ketone, and esters such as ethyl acetate and n-butyl acetate, and two or more of these may be mixed and used. If necessary, an acid or a base may be added to adjust the pH of the solution. Known acids and bases can be selected and used.

[3] Method for producing carbon-coated Si-C composite particles

A method for producing carbon-coated Si-C composite particles according to the present invention includes the following steps (A) and (B). By the method for producing carbon-coated Si-C composite particles of the present invention, the carbon-coated Si-C composite particles of the present invention described above, that is, the carbon-coated Si-C composite particles described in [1] above can be obtained.

Step (A): a step of allowing a silicon-containing gas to act on porous carbon to precipitate silicon in pores and on a surface of the porous carbon to obtain Si-C composite particles
Step (B): a step of forming a carbonaceous layer on surfaces of the Si-C composite particles by a chemical vapor deposition (CVD) method at 600 to 750°C using at least one selected from acetylene and ethylene as a carbon source

By the method for producing carbon-coated Si-C composite particles, the carbon-coated Si-C composite particles of the present invention, that is, the carbon-coated Si-C composite particles described in [1] above can be obtained.

Further, in the method for producing carbon-coated Si-C composite particles, the method for obtaining porous carbon is not particularly limited. For example, the porous carbon can be obtained by the following step (α) of preparing porous carbon.

(Step (α))

The step (α) for preparing porous carbon is not particularly limited as long as the porous carbon can be obtained. The porous carbon is not particularly limited as long as fine silicon can be precipitated inside the pores thereof, and even when the silicon therein expands or contracts due to the insertion or deinsertion of lithium, a stress acts to maintain the structure of the pores or a space not occupied by silicon is present and is crushed, thereby reducing the degree of expansion or contraction of the negative electrode material as a whole. Specific examples of the porous carbon include activated carbon, carbon obtained by thermally decomposing a resin or an organic substance, molecular sieving carbon, active carbon fibers, aggregates of vapor grown carbon fibers, aggregates of carbon nanotubes (CNT), and inorganic template carbon.

As used herein, the porous carbon refers to a carbonaceous material having a BET specific surface area of 200 m$^2$/g or more. The porous carbon used as a raw material for the carbon-coated Si-C composite particles according to the present invention is preferably a carbonaceous material having a BET specific surface area of 800 m$^2$/g or more, and more preferably 1000 m$^2$/g or more. The upper limit value of the BET specific surface area of the porous carbon used as a raw material for the carbon-coated Si-C composite particles according to the present invention is not particularly limited, and is, for example, 4000 m$^2$/g or less, preferably 3800 m$^2$/g or less.

To investigate the pore distribution of the porous carbon, an adsorption desorption isotherm by a gas adsorption method, for example, is analyzed by a known method. The absorption gas is not particularly limited, but nitrogen gas, carbon dioxide, and argon are usually used. In the present invention, nitrogen is used as the adsorption gas.

For example, a commercially available porous carbon having a specific pore distribution may be used, but for example, a porous carbon having a desired pore distribution may be produced by adjusting the conditions for thermal decomposition of the resin while examining the change in the pore distribution by the method described above.

(Step (A))

The step (A) is a step of allowing a silicon-containing gas, preferably silane gas, to act on porous carbon to precipitate silicon in pores and on a surface of the porous carbon to obtain Si-C composite particles.

In the step (A), for example, particulate porous carbon is placed in a chamber of a CVD apparatus, and a silicon-containing gas (preferably silane gas) is allowed to act on the porous carbon in a heated state. By exposing the porous carbon particles to the silicon-containing gas at a high temperature, silicon can be precipitated (deposited) on a surface and in pores of the porous carbon. By allowing the silicon-containing gas to enter the inside of the pores of the porous carbon, silicon can be precipitated in at least a part of the inside of the pores. As a method therefor, for example, an apparatus and a method disclosed in Patent Literature 1 can be used.

(Step (B))

The step (B) is a step of forming a carbonaceous layer on surfaces of the Si-C composite particles by a chemical vapor deposition (CVD) method at 600 to 750°C using at least one selected from acetylene and ethylene as a carbon source.

In the step (B), for example, the Si-C composite particles obtained in the step (A) are placed in the chamber of the CVD apparatus, at least one selected from acetylene and ethylene is introduced as a carbon source in a heated state, carbon is generated by a thermal decomposition reaction of acetylene or ethylene, and carbon can be precipitated on the surfaces of the Si-C composite particles. It is more preferable to use only acetylene as a carbon source. As the reactor, a fixed bed or a fluidized bed can be used. In addition to the reaction gas, hydrogen, nitrogen, argon, and helium can be used as the carrier gas.

In the present invention, the generation of silicon carbide (SiC) is suppressed by performing a carbon CVD (hereinafter, may be referred to as C-CVD) method at a relatively low temperature using the carbon source. Further, by thermally decomposing the carbon source at a relatively high temperature in a temperature at which the generation of silicon carbide (SiC) can be suppressed, a high-quality carbonaceous layer can be precipitated. The specific temperature is 600 to 750°C. The temperature is more preferably 650 to 700°C for the same reason.

In the production method of the present invention, the step (A) and the step (B) are preferably carried out continuously, and the Si-C composite particles obtained in the step (A) are also preferably subjected to the step (B) after being replaced with an inert gas. Here, the inert gas means a non-oxidizing gas and may contain, for example, hydrogen. Further, the replacement with an inert gas may be accompanied by heating.

When the step (A) and the step (B) are carried out continuously or when the Si-C composite particles obtained in the step (A) are subjected to the step (B) after replacement with an inert gas, the Si-C composite particles obtained in the step (A) can be subjected to the step (B) without being oxidized, which is preferable.

In the present invention, "the step (A) and the step (B) are carried out continuously" means that the step (B) is performed after the step (A) without being taken out from the furnace. That is, an aspect including the gas replacement process as described above is included.

[4] Negative electrode mixture layer

A negative electrode mixture layer according to the present invention contains the carbon-coated Si-C composite particles. The carbon-coated Si-C composite particles contained in the negative electrode mixture layer are the carbon-coated Si-C composite particles of the present invention described above, that is, the carbon-coated Si-C composite particles described in [1] above. Further, the negative electrode mixture layer may contain the polymer-coated carbon-coated Si-C composite particles described in [2] above instead of the carbon-coated Si-C composite particles.

In the negative electrode mixture layer, the carbon-coated Si-C composite particles or the polymer-coated carbon-coated Si-C composite particles act as a negative electrode material. The negative electrode mixture layer of the present invention can be used as a negative electrode mixture layer for a lithium-ion secondary battery. The negative electrode mixture layer generally contains a negative electrode material, a binder, and a conductive additive as an optional component. Here, the negative electrode material in the present invention refers to a negative electrode active material and a composite of a negative electrode active material and another material.

A method for producing the negative electrode mixture layer may be, for example, a known method as described below. A negative electrode material, a binder, a conductive additive as an optional component, and a solvent are used to prepare a slurry for forming a negative electrode mixture layer. The slurry is applied to a current collector such as copper foil and dried. This is further vacuum-dried, roll-pressed, and then cut or punched out into a desired shape and size. The pressure in the roll-pressing is usually 100 to 500 MPa. The obtained sheet may be referred to as a negative electrode sheet. The negative electrode sheet is obtained by pressing and contains a negative electrode mixture layer and a current collector. The electrode density (negative electrode mixture layer density) is not particularly limited, but is preferably 0.7 g/cm$^3$ or more, and preferably 1.9 g/cm$^3$ or less.

As the negative electrode material, the carbon-coated Si-C composite particles or the polymer-coated carbon-coated Si-C composite particles of the present invention may be used alone or in combination with other negative electrode materials. As the other negative electrode material, an active material generally used as a negative electrode active material of a lithium-ion secondary battery can be used. In a case where another negative electrode material is used, it is usually used by mixing the carbon-coated Si-C composite particles or the polymer-coated carbon-coated Si-C composite particles with another negative electrode material.

Examples of other negative electrode materials include graphite, hard carbon, lithium titanate ($Li_4Ti_5O_{12}$), silicon and alloy-based active materials such as tin, and composite materials thereof. These negative electrode materials are usually in the form of particles. The negative electrode material other than the carbon-coated Si-C composite particles may be used alone or in combination of two or more kinds thereof. Among them, graphite (graphite particles) and hard carbon are particularly preferably used. An aspect in which the negative electrode mixture layer of the present invention contains the carbon-coated Si-C composite particles and graphite particles is one of preferred aspects.

In a case where the negative electrode material is formed of the carbon-coated Si-C composite particles and another negative electrode material, the carbon-coated Si-C composite particles preferably contain 2 to 99% by mass, more preferably 4 to 70% by mass per 100% by mass of the negative electrode material.

The same applies to the case where a part or all of the carbon-coated Si-C composite particles are replaced with the polymer-coated carbon-coated Si-C composite particles.

Any binder generally used in the negative electrode mixture layer of a lithium-ion secondary battery can be freely selected and used as the binder. Examples thereof include polyethylene, polypropylene, ethylene-propylene terpolymer, butadiene rubber, styrene-butadiene rubber, butyl rubber, acrylic rubber, polyvinylidene fluoride, polytetrafluoroethylene, polyethylene oxide, polyepichlorohydrin, polyphosphazene, polyacrylonitrile, carboxymethyl cellulose and salts thereof, polyacrylic acid, and polyacrylamide. The binder may be used alone or in combination of two or more kinds thereof. The amount of the binder is preferably 0.5 to 30 parts by mass based on 100 parts by mass of the negative electrode material.

The conductive additive is not particularly limited as long as the conductive additive plays a role in imparting conductivity and dimensional stability (action of absorbing volume change through insertion and deinsertion of lithium) to the electrode. Examples thereof include carbon nanotubes, carbon nanofibers, vapor grown carbon fibers (for example, "VGCF®-H " manufactured by Showa Denko K.K.), conductive carbon black (for example, "DENKA BLACK®" manufactured by Denka Company Limited, "Super C65" manufactured by Imerys Graphite & Carbon, "Super C45" manufactured by Imerys Graphite & Carbon), and conductive graphite (for example, "KS6L" manufactured by Imerys Graphite & Carbon and "SFG6L" manufactured by Imerys Graphite & Carbon). Further, two or more of the conductive additives can be used. The amount of the conductive additive is preferably 1 to 30 parts by mass based on 100 parts by mass of the negative electrode material.

The conductive additive preferably contains carbon nanotubes, carbon nanofibers, and vapor grown carbon fibers and the fiber length of these conductive additive is preferably 1/2 or more of the length of $D_{v50}$ of the composite particles. With this length, these conductive additive bridges between the negative electrode active materials containing the composite particles, and the cycle characteristics can be improved. Single-wall type or multi-wall type carbon nanotubes or carbon nanofibers having a fiber diameter of 15 nm or less are preferable because the number of bridges is further increased with the same amount of carbon nanotubes or carbon nanofibers added as compared with thicker fibrous carbon. Since these are more flexible, these are more preferable from the viewpoint of improving the electrode density.

The amount of the conductive additive is preferably 1 to 30 parts by mass based on 100 parts by mass of the carbon-coated Si-C composite particles and/or the polymer-coated carbon-coated Si-C composite particles.

The solvent for preparing the slurry for electrode coating is not particularly limited, and examples thereof include N-methyl-2-pyrrolidone, dimethylformamide, isopropanol, and water. In the case of a binder using water as a solvent, a thickening agent is preferably used in combination. The amount of solvent is adjusted so that the paste achieves such viscosity that the slurry is easily applied onto a current collector.

[5] Lithium-ion secondary battery

A lithium-ion secondary battery according to the present invention contains the negative electrode mixture layer. The lithium-ion secondary battery usually contains a negative electrode containing the negative electrode mixture layer and a current collector, a positive electrode containing a positive electrode mixture layer and a current collector, at least one of a nonaqueous electrolytic solution and a nonaqueous polymer electrolyte present therebetween, a separator, and a battery case accommodating these components. As long as the lithium-ion secondary battery includes the negative electrode mixture layer, other configurations including conventionally known configurations can be employed without particular limitation.

The positive electrode mixture layer usually contains a positive electrode material, a conductive additive, and a binder. The positive electrode in the lithium-ion secondary battery may have a general configuration in a typical lithium-ion secondary battery.

The positive electrode material is not particularly limited as long as electrochemical lithium insertion and deinsertion can be reversibly performed and the oxidation-reduction potential of these reactions is sufficiently higher than the standard oxidation-reduction potential of the negative electrode reaction. For example, $LiCoO_2$, $LiNiO_2$, $LiMn_2O_4$, $LiCo_{1/3}Mn_{1/3}Ni_{1/3}O_2$, carbon-coated $LiFePO_4$, or a mixture thereof can be suitably used.

As the conductive additive, the binder, and the solvent for preparing the slurry, those described in the section of the negative electrode can be used. Aluminum foil is preferably used as the current collector.

There is no particular limitation on the nonaqueous electrolytic solution and nonaqueous polymer electrolyte used in the lithium-ion batteries. Examples of the nonaqueous electrolytic solution include an organic electrolytic solution in which a lithium salt such as $LiClO_4$, $LiPF_6$, $LiAsF_6$, $LiBF_4$, $LiSO_3CF_3$, and $CH_3SO_3Li$ is dissolved in a nonaqueous solvent such as ethylene carbonate, diethyl carbonate, dimethyl carbonate, ethyl methyl carbonate, propylene carbonate, butylene carbonate, acetonitrile, propionitrile, dimethoxyethane, tetrahydrofuran, and γ-butyrolactone.

Examples of the nonaqueous polymer electrolyte include a gel polymer electrolyte containing, for example, polyethylene oxide, polyacrylonitrile, polyvinylidene fluoride, and polymethyl methacrylate; and a solid polymer electrolyte containing, for example, a polymer having an ethylene oxide bond.

Further, a small amount of the additive used in the electrolytic solution of a lithium-ion secondary battery may be added to the nonaqueous electrolytic solution. Examples of the substance include vinylene carbonate (VC), biphenyl, propanesultone (PS), fluoroethylene carbonate (FEC), and ethylene sultone (ES). VC and FEC are preferred. The amount to be added is preferably 0.01 to 20% by mass based on 100% by mass of the nonaqueous electrolytic solution.

The separator can be freely selected from materials that can be used in general lithium-ion secondary batteries, including combinations thereof, and examples thereof include microporous films made of polyethylene or polypropylene. In addition, it is also possible to use separators obtained by mixing particles such as $SiO_2$ or $Al_2O_3$ as fillers into such separators, or separators obtained by adhering the particles to the surfaces of such separators.

The battery case is not particularly limited as long as it can accommodate the positive electrode, the negative electrode, the separator, and the electrolytic solution. In addition to those standardized in the industry such as commercially available battery packs, 18650 cylindrical cell, and coin-shaped cells, the battery case, including those packed with aluminum packaging material, for example, can be freely designed and used.

The electrodes may be stacked and packed for use. The single cells can be connected in series and used as batteries or modules.

The lithium-ion secondary battery according to the present invention can be used as a power source for electronic devices such as smartphones, tablet PCs, and mobile information terminals; a power source for electric motors such as electric tools, vacuum cleaners, electric bicycles, drones, and electric vehicles; and storage of electric power obtained by, for example, fuel cells, solar power generation, and wind power generation.

Examples

Hereinafter, the present invention will be specifically described with reference to Examples and Comparative Examples, but the present invention is not limited to these Examples. Measurement of physical property values and battery evaluation were performed as follows.

[Raman spectroscopy measurement]

The Raman spectroscopy of the particles obtained in Examples and Comparative Examples was measured under the following conditions.

Microscopic Raman spectroscopic measuring apparatus: LabRAM HR Evolution manufactured by HORIBA, Ltd.

Excitation wavelength: 532 nm
Exposure time: 5 seconds
Integration: 2 times
Diffraction gratings: 300/mm (600 nm)

```
Measurement range: length 80 µm × width 100 µm
```

Number of points: 100 points evaluated at a longitudinal feed of 17.8 um and a lateral feed of 22.2 um

Regarding the intensity of the peak, the height from the baseline to the peak top was taken as the intensity. The ratio ($I_D/I_G$) of the intensity $I_D$ of the peak in the vicinity of 1360 cm$^{-1}$ (derived from the amorphous component) to the intensity $I_G$ of the peak in the vicinity of 1600 cm$^{-1}$ (derived from the graphite component) was calculated from the measured spectrum. Two points were measured and the average value was used as R value as an index for evaluating the carbon quality of the carbonaceous layer.

Further, the ratio ($I_{Si}/I_G$) of the intensity $I_{Si}$ of the peak derived from amorphous silicon appearing at 450 to 495 cm$^{-1}$ to $I_G$ was calculated. Two points were measured and the average value was taken as $I_{Si}/I_G$, which was used as an index for coating with a carbonaceous material.

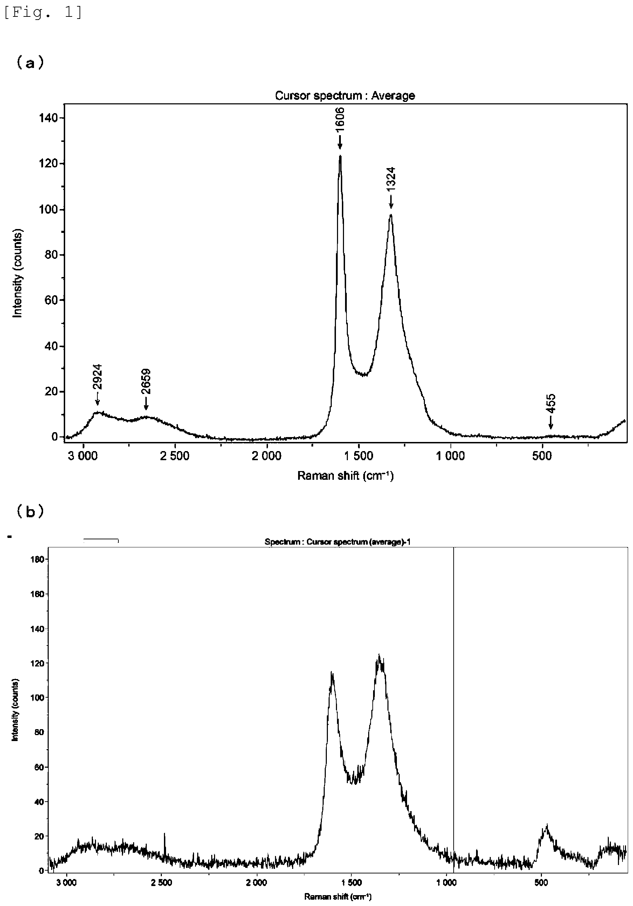

The Raman spectra of Example 1 and Comparative Example 2 are shown in Figure 1.

[Powder XRD measurement]

A glass sample plate was filled with the particles obtained in Examples and Comparative Examples (window length × width: 18 × 20 mm, depth: 0.2 mm), and measurement was performed under the following conditions.

XRD apparatus: SmartLab® manufactured by Rigaku Corporation
X-ray source: Cu-K$\alpha$ ray
K$\beta$ ray removal method: Ni filter
X-ray output: 45 kV, 200 mA
Measuring range: 10.0 to 80.0 deg.
Scan speed: 10.0 deg./min

The obtained XRD pattern was subjected to background removal, removal of K$\alpha$2 component, and smoothing using analysis software (PDXL2, manufactured by Rigaku Corporation), and then subjected to peak fitting to determine the peak position and intensity. In addition, the full width at half maximum of the peak of the 111 plane of Si, (peak intensity of 111 plane of SiC)/(peak intensity of 111 plane of Si) were determined. Regarding the intensity of the peak, the height from the baseline to the peak top was taken as the intensity.

[True density measurement]

The sample was vacuum dried at 180°C for 12 hours, and then filled in a measurement cell so as to be 40% to 60% of the cell, in a glove box under a dry argon atmosphere, and the cell was tapped 100 times or more, and then the weight of the sample was measured. Thereafter, the sample was taken out to the atmosphere and measured under the following conditions to calculate the true density.

- Apparatus: Micromeritics Instrument Corporation AccuPycII 1340 Gas Pycnometer
- Measurement cell: Aluminum, depth 39.3 mm, inner diameter 18 mm
- Carrier gas: Helium gas
- Gas pressure: 21.5 psig (148.2 kPag)
- Number of purges during measurement: 200 times
- Temperature: 25°C ± 1°C

[Acquisition of cross-sectional SEM photographs and carbon concentration analysis by cross-sectional SEM-EDS]

The cross-sectional SEM photographs and carbon concentrations of the particles obtained by cross-sectional SEM-EDS in Examples and Comparative Examples were obtained under the following conditions. Further, SEM means a scanning electron microscope, and EDS means an energy dispersive X-ray spectroscopy.

The sample is carried on a carbon tape and, in the case of particle observation, the observation is carried out as it is. In the case of observing the cross-section, the cross-section was processed using CROSS SECTION POLISHER (manufactured by JEOL Ltd.). Observation and measurement were performed with the following equipment and conditions.

- SEM: scanning electron microscope apparatus: Regulus 8220 (manufactured by Hitachi High-Tech Corporation)
- EDS: Xflash® 5060 FlatQUAD (manufactured by Bruker Corporation)
- Acceleration voltage: 1 to 20 kV
- Observation magnification: 500 to 5,000 times (select appropriately according to the size of the particles)

The average thickness of the carbonaceous layer (carbon layer) was measured by measuring the thickness of the carbon-coated portion at three locations per particle, and used as the average value for six randomly selected particles.

Regarding the carbon coverage, in Examples 1 to 5 and Comparative Examples 1 to 4, the particle outer peripheral length of the Si-C composite particles calculated from cross-sectional SEM of randomly selected six particles and the length of the carbonaceous layer (carbon layer) covering the Si-C composite particles were calculated, and the carbon coverage was determined as the ratio (length of the carbonaceous layer (carbon layer) covering the Si-C composite particles/particle outer peripheral length of the Si-C composite particles × 100). Further, in Examples 6 to 13 and Comparative Examples 5 to 8, in the cross-sectional SEM-EDS of six randomly selected particles, 10 points on the outer periphery obtained by dividing the cross-sectional outer periphery into 10 at equal intervals are used as measurement points of the particle surface, the carbon concentration of the center point and the measurement points of the particle surface were measured, and the ratio of the measurement points on the particle surface having a higher carbon concentration than the center point was determined.

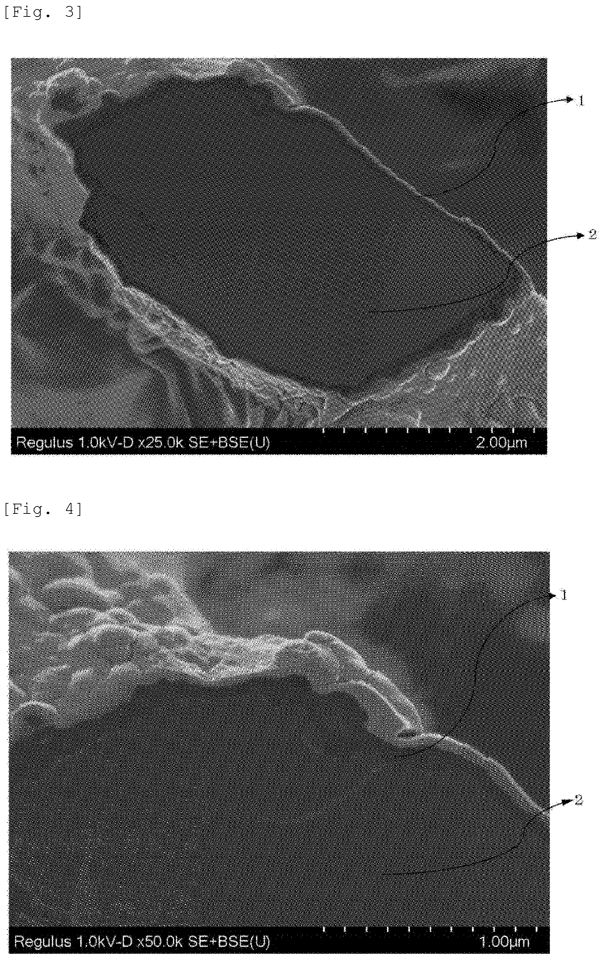

Cross-sectional SEM photographs of carbon-coated Si-C composite particles of Example 1 are shown in Figures 3 and 4. In Figures 3 and 4, reference numeral 1 indicates a carbonaceous layer, and reference numeral 2: indicates Si-C composite particles.

[BET specific surface area measurement, pore volume measurement]

The sample was placed in a sample cell (9 mm × 135 mm) so that the total surface area of the sample was 2 to 60 m$^2$, dried at 300°C under vacuum conditions for 1 hour, and then the sample weight was measured, and the measurement was performed by the following method.

- Apparatus: NOVA 4200e® manufactured by Quantachrome Instruments
- Measurement gas: nitrogen
- Relative pressure setting value in measurement range: 0.005 to 0.995

(Calculation method)

(Calculation method of BET specific surface area)

The BET specific surface area of the porous carbon material was calculated by a BET multipoint method from adsorption isotherm data at a relative pressure in the vicinity of 0.005 to less than 0.08.

The BET specific surface area of the composite particles was calculated by a BET multipoint method from adsorption isotherm data at three points at relative pressures in the vicinity of 0.1, in the vicinity of 0.2, and in the vicinity of 0.3.

(Calculation method of pore volume)

The pore volume was determined by calculating the adsorption amount at a relative pressure of 0.99 by linear approximation from adsorption isotherm data at two points around a relative pressure of 0.99. At this time, the above calculation was performed with the nitrogen liquid density of 0.808 g/cc, the volume of 1 mol of nitrogen in the standard state of 22.4133 L, and the nitrogen atomic weight of 14.0067.

[Measurement of particle size distribution]

One ultra-small spatula of the particles obtained in each of Examples and Comparative Examples and two drops of a 100-fold diluted solution of an undiluted solution (32% by mass) of a nonionic surfactant (SARAYA coconut detergent high power) were added to 15 mL of water, followed by ultrasonic dispersion for 3 minutes. This dispersion was charged into a laser diffraction-type particle size distribution analyzer (LMS-2000e) manufactured by Seishin Enterprise Co., Ltd., and a volume-based cumulative particle size distribution was measured to determine 50% particle size $D_{V50}$.

[Oxygen content measurement]

The oxygen content of the particles obtained in Examples and Comparative Examples was measured under the following conditions.

- Oxygen/nitrogen/hydrogen analyzer: EMGA-920 manufactured by HORIBA, Ltd.

- Carrier gas: Argon

Approximately 20 mg of the particles obtained in Examples and Comparative Examples were weighed in nickel capsules and measured by an oxygen-nitrogen simultaneous analyzer (inert gas melting → infrared absorption method).

The oxygen content was measured within two days after production of the carbon-coated Si-C composite particles by C-CVD (within two days after production of the Si-C composite particles in Comparative Examples 2, 5, 6, and 7) and after storage for two months. The two months storage conditions were as follows: carbon-coated Si-C composite particles (Si-C composite particles in Comparative Examples 2, 5, 6, and 7) were placed in a 0.04 mm thick polyethylene bag with a zipper (UNIPAC, manufactured by SEISANNIPPONSHA LTD.) and stored in a thermostatic chamber (temperature 23°C, humidity 50%) for two months. The oxygen content within two days immediately after production is also labeled as "oxygen content after CVD treatment", and the oxygen content after storage for two months is also labeled as "oxygen content after aging for two months".

[Measurement of Si (silicon) content]

The silicon content of the particles obtained in Examples and Comparative Examples was measured under the following conditions.

[Content of Si element in sample by X-ray fluorescence analysis (% by mass)]

A sample cup was filled with a sample, the measurement was performed by the following method, and the content of Si element was calculated in % by mass using the fundamental parameter method (FP method).

- X-ray fluorescence apparatus: NEX CG manufactured by Rigaku Corporation
- Tube voltage: 50 kV
- Tube current: 1.00 mA
- Sample cup: Φ32, 12 mL, CH1530
- Sample weight: 2 to 4 g
- Sample height: 5 to 18 mm

The FP method was carried out using the analysis software attached to the device.

[TG (polymer content analysis)]

The polymer content was measured by the following equipment and conditions.

- Measuring apparatus: TG-DTA2000SE (manufactured by NETZSCH Japan K.K.)
- Measurement temperature: room temperature to 1000°C
- Sample amount: 13 to 15 mg
- Temperature increasing rate: 10°C/min
- Atmospheric gas: Ar
- Flow rate: 100 ml/min

The weight loss due to thermal decomposition from 200°C to 350°C was taken as the amount of polymer contained to calculate the polymer content.

[Preparation of negative electrode sheet]

Styrene butadiene rubber (SBR) and carboxymethyl cellulose (CMC) were used as binders.

Specifically, an SBR aqueous dispersion in which SBR having a solid content of 40% by mass was dispersed and a 2% by mass CMC aqueous solution in which CMC powder was dissolved were used.

A mixture of carbon black (SUPER C45, manufactured by Imerys Graphite & Carbon) and vapor grown carbon fibers (VGCF®-H, manufactured by Showa Denko K.K.) at a mass ratio of 3:2 was prepared as a mixed conductive additive.

A slurry for forming a negative electrode mixture layer was obtained by mixing a negative electrode material, a mixed conductive additive, a 2% by mass CMC aqueous solution, and a 40% by mass SBR aqueous dispersion such that the negative electrode material produced in Examples and Comparative Examples described below was 90 parts by mass, the mixed conductive additive was 5 parts by mass, the CMC solid content was 2.5 parts by mass, and the SBR solid content was 2.5 parts by mass, adding an appropriate amount of water for viscosity adjustment, and kneading the mixture with a rotation/revolution mixer (manufactured by THINKY

CORPORATION).

The slurry for forming a negative electrode mixture layer was uniformly applied to a copper foil having a thickness of 20 um using a doctor blade so as to have a thickness of 150 $\mu$m, dried on a hot plate, and then vacuum-dried to obtain a negative electrode sheet. The dried negative electrode sheet was pressed with a uniaxial press at a pressure of 300 Mpa to obtain a negative electrode sheet for battery evaluation. The thickness of the obtained negative electrode sheet was 62 um including the thickness of the copper foil.

[Measurement of electrode density]

The negative electrode sheet (current collector + negative electrode mixture layer) after pressing was punched out into a circular shape having a diameter of 16 mm, and its mass and thickness were measured. The mass and thickness of the negative electrode mixture layer were determined by subtracting from these values the mass and thickness of the current collector (circular shape with diameter of 16 mm) that had been measured separately, and the mass per unit area (obtained by dividing the mass of the negative electrode mixture layer by the electrode area) and the electrode density (negative electrode mixture layer density) were calculated from the mass and thickness of the negative electrode mixture layer and the diameter (16 mm).

[Preparation of a coin battery (lithium counter electrode cell)]

A negative electrode sheet was punched out to a 16mm$\varphi$ and pressed by a uniaxial pressing machine to adjust the density of the negative electrode mixture layer to 1.4 g/cc, thereby obtaining a negative electrode.

In an insulating gasket made of polypropylene (inside diameter: approximately 18mm), separators (polypropylene microporous film) impregnated with an electrolytic solution were sandwiched by the negative electrode described above and metal lithium foil (thicknesses: 1.7 mm) punched out to 17.5 mm$\varphi$, and laminated. At this time, the surface of the negative electrode mixture layer of the negative electrode was laminated so as to face the metal lithium foil with the separator sandwiched therebetween. This was placed in a 2320 coin-shaped cell and sealed with a caulking machine to obtain a test cell (lithium counter electrode cell).

The electrolytic solution in the lithium counter electrode cell is obtained by mixing 1 part by mass of vinylene carbonate (VC) and 10 parts by mass of fluoroethylene carbonate (FEC) in 100 parts by mass of a solvent in which ethylene carbonate, ethyl methyl carbonate, and diethyl carbonate are mixed at a volume ratio of 3:5:2, and the electrolyte LiPF$_6$ is further dissolved therein to be a concentration of 1 mol/L.

[Measurement test of initial insertion specific capacity and initial coulombic efficiency]

The test was conducted using a lithium counter electrode cell. First, CC (constant current) discharging was performed up to 0.005 V at a current value corresponding to 0.1 C. Next, the discharging was switched to constant voltage (CV) discharging at 0.005V, and the discharging was performed at a cut-off current value of 0.005 C. The specific capacity at this time is taken as the initial insertion specific capacity. Next, charging was performed at a current value corresponding to 0.1 C in CC mode with an upper limit voltage of 1.5 V. The specific capacity at this time is taken as the initial deinsertion specific capacity.

The test was conducted in a constant temperature bath set at 25°C. At this time, the specific capacity is a value obtained by dividing the capacity by the mass of the negative electrode material. In the present test, the "current value equivalent to 1 C" is a current that can discharge the capacity of the negative electrode estimated from the masses of Si and carbon (including graphite) in the negative electrode active material contained in the negative electrode and the theoretical specific capacity (4200 mAh/g and 372 mAh/g, respectively) in 1 hour.

The ratio of the initial deinsertion specific capacity to the initial insertion specific capacity (initial deinsertion specific capacity / initial insertion specific capacity) was expressed as a percentage, and the result was taken as the initial coulombic efficiency.

The measurement of the initial coulombic efficiency was performed by preparing a negative electrode sheet within two days after the carbon-coated Si-C composite particles were produced by C-CVD (within two days after production of the Si-C composite particles in Comparative Examples 2, 5, 6, and 7), and then preparing a coin battery and measuring the initial coulombic efficiency within one week. Stored products obtained by placing the carbon-coated Si-C composite particles (Si-C composite particles in Comparative Examples 2, 5, 6, and 7) in a 0.04 mm thick polyethylene bag with a zipper (UNIPAC, manufactured by SEISANNIPPONSHA LTD.) and storing it in a thermostatic chamber (temperature 23°C, humidity 50%) for two months were used to prepare a negative electrode sheet within two days after the lapse of two months, and then the preparation of the coin battery and the measurement of the initial coulombic efficiency were performed within one week. The initial coulombic efficiency within two days after production is simply labeled as "initial coulombic efficiency", and the initial coulombic efficiency after storage for two months is also labeled as "initial coulombic efficiency after aging storage for two months".

Further, the ratio of the initial coulombic efficiency after aging storage for two months to the initial coulombic efficiency was determined as the retention rate (%) of the initial coulombic efficiency for two months.

[Calculation of Si utilization rate]

The initial insertion specific capacity of the carbon-coated Si-C composite particles calculated from the value of the initial insertion specific capacity by the lithium counter electrode cell and the capacity of graphite was taken as the carbon-coated Si-C initial insertion specific capacity. That is, the carbon-coated Si-C initial insertion specific capacity was calculated by the following equation.

$$\text{(carbon-coated Si-C initial insertion specific capacity)}$$
$$= \{\text{(initial insertion specific capacity)} - \text{(graphite initial}$$
$$\text{insertion specific capacity} \times \text{graphite mass ratio)}\}/\text{(carbon-}$$
$$\text{coated Si-C mass ratio)}$$

Here, 372 mAh/g, which is the theoretical specific capacity of carbon, was used as the graphite initial insertion specific capacity.

Here, the graphite mass ratio is the mass ratio of graphite in the entire negative electrode material. The carbon-coated Si-C mass ratio is the mass ratio of the carbon-coated Si-C composite particles in the entire negative electrode material. In Examples and Comparative Examples, the sum of these is 1.

The Si initial insertion specific capacity was calculated by subtracting the initial insertion specific capacity of carbon in the carbon-coated Si-C composite particles from the carbon-coated Si-C initial insertion specific capacity and dividing by the silicon content in the sample. That is, the Si initial insertion specific capacity was calculated by the following equation.

(Si initial insertion specific capacity) = {(carbon-coated Si-C initial insertion specific capacity) - (initial insertion specific capacity of carbon in carbon-coated Si-C composite particles)}/Si content

Then, the Si utilization rate (%) was determined by dividing the Si initial insertion specific capacity by the theoretical value (4200 mAh/g) of the silicon insertion specific capacity and multiplying by 100. That is, the Si utilization rate was calculated by the following equation.

$$\text{(Si utilization rate)} = 100 \times \text{(Si initial insertion}$$
$$\text{specific capacity)}/4200 \; (\%)$$

The initial insertion specific capacity of carbon in the carbon-coated Si-C composite particles was determined by setting the theoretical capacity of carbon to 372 mAh/g, multiplying the theoretical capacity by the carbon content (100 - Si content - oxygen content), and dividing the product by 100.

Preparation methods, sources, and physical property values of the raw materials for the negative electrode material (porous carbon, Si-C composite particles, carbon-coated Si-C composite particles, and graphite particles) are shown below.

[Porous carbon]

Commercially available active carbon with a BET specific surface area of 1700 $m^2$/g and a particle size of $D_{V50}$ of 9.2 um was used as porous carbon (1).

Commercially available active carbon with a BET specific surface area of 1700 $m^2$/g and a particle size of $D_{V50}$

of 7.0 um was used as porous carbon (2).

[Si-C composite particles]

(Si-C composite particles (1))

The porous carbon (1) having a BET specific surface area of 1700 m$^2$/g and a particle size $D_{V50}$ of 9.2 um was treated for 8 hours at a set temperature of 450°C, a pressure of 760 torr and a flow rate of 100 sccm in a tube furnace having a silane gas flow of 1.3% by volume mixed with nitrogen gas to precipitate silicon on the surface and inside of the obtained porous carbon, thereby obtaining the Si-C composite particles (1). The Si-C composite particles (1) had a $D_{V50}$ of 9.2 um, a BET specific surface area of 3.2 m$^2$/g, and a silicon content of 48% by mass.

(Si-C composite particles (2))

The porous carbon (2) having a BET specific surface area of 1700 m$^2$/g and a particle size $D_{V50}$ of 7.0 um was treated for 7.5 hours at a set temperature of 450°C, a pressure of 760 torr and a flow rate of 100 sccm in a tube furnace having a silane gas flow of 1.3% by volume mixed with nitrogen gas to precipitate silicon on the surface and inside of the obtained porous carbon, thereby obtaining the Si-C composite particles (2). The Si-C composite particles (2) had a $D_{V50}$ of 7.0 um, a BET specific surface area of 14.2 m$^2$/g, and a silicon content of 46% by mass.

[Preparation method for carbon-coated Si-C composite particles]

The obtained Si-C composite particles were placed in a chamber of a horizontal tubular furnace CVD apparatus, and after vacuum Ar replacement was performed, acetylene gas, ethylene gas, or methane gas was introduced as a carbon source while the tubular furnace was heated by increasing temperature within 25 minutes to a desired temperature, and carbon coating was applied to the Si-C composite particles by thermal decomposition reaction.
Conditions such as carbon source and temperature are shown in each Example and Comparative Example.

[Graphite particles]

Commercially available artificial graphite particles having a BET specific surface area of 2.7 m$^2$/g, a particle size $D_{V10}$ of 7.0 um, a particle size $D_{V50}$ of 14.0 um, a particle size $D_{V90}$ of 27.0 um, and a tap density of 0.98 g/cc were used.

[Negative electrode material]

A mixed negative electrode material for battery evaluation was prepared by mixing the carbon-coated Si-C composite particles according to the present invention (Si-C composite particles in Comparative Examples 2, 5, 6, and 7) and graphite particles. At this time, graphite particles were mixed so that the content of silicon in the mixed negative electrode material was 4.9 to 5.7% by mass.

[Example 1]

The Si-C composite particles (1) obtained by the above method were subjected to C-CVD at 650°C for 120 minutes using acetylene gas as a carbon source to prepare carbon-coated SiC composite particles. The physical property values are shown in Table 1.
The obtained carbon-coated Si-C composite particles were new carbon-coated Si-C composite particles that were able to achieve both the fact that R value of the Raman spectrum was 0.78 and the composite particles were 100% coated with high-quality carbon, and that SiC was absent since $I_{SiC111}/I_{Si111}$ in the XRD pattern was 0.00.
The carbon-coated Si-C composite particles and graphite particles were mixed to obtain a mixed negative electrode material. The mass ratios in the total mixed negative electrode material were 0.114 and 0.886 respectively. The battery characteristics are shown in Table 2. It was found that this negative electrode material has a higher silicon utilization rate and has a high initial coulombic efficiency than the conventional technique.

[Example 2]

The Si-C composite particles (1) obtained by the above method were subjected to C-CVD at 650°C for 60 minutes using acetylene gas as a carbon source to prepare carbon-coated SiC composite particles. The physical property values are shown in Table 1.

As in Example 1, the fact that R value according to the Raman spectrum was less than 1.00 and that $I_{SiC111}/I_{Si111}$ according to XRD was 0.00 were both achieved.

The average thickness of the carbonaceous layer was as thin as 17.2 nm. The carbon-coated Si-C composite particles and graphite particles were mixed to obtain a mixed negative electrode material. The mass ratios in the total mixed negative electrode material were 0.108 and 0.892 respectively. The battery characteristics are shown in Table 2. It was found that the battery characteristics were good.

[Example 3]

The Si-C composite particles (2) obtained by the above method were subjected to C-CVD at 650°C for 120 minutes using acetylene gas as a carbon source to prepare carbon-coated SiC composite particles. The physical property values are shown in Table 1.

$I_{Si}/I_G$ value according to the Raman spectrum was as small as 0.01, thus the fact that R value according to the Raman spectrum was less than 1.00, and that $I_{SiC111}/I_{Si111}$ value according to XRD was 0.00 were both achieved as the same in Example 1. With respect to the BET specific surface area after carbon coating, the BET specific surface area before carbon coating was larger in Example 3 than in Example 1, and as a result, the BET specific surface area after carbon coating was also larger than in Example 1.

The carbon-coated Si-C composite particles and graphite particles were mixed to obtain a mixed negative electrode material. The mass ratios in the total mixed negative electrode material were 0.119 and 0.881 respectively. The battery characteristics are shown in Table 2. It was found that the battery characteristics were good.

[Example 4]

The Si-C composite particles (1) obtained by the above method were subjected to C-CVD at 700°C for 16 minutes using acetylene as a carbon source to prepare carbon-coated Si-C composite particles. The physical property values are shown in Table 1.

In comparison with Example 1, R value according to the Raman spectrum was 0.84 and $I_{SiC111}/I_{Si111}$, according to XRD was 0.00, which were the same as in Example 1.

The full width at half maximum of the peak of 111 plane of Si according to XRD was 3.36 deg., which was slightly smaller than 5.02 deg. of Example 1, and the amorphous characteristic of Si was thus considered to be slightly lower than that of Example 1.

The carbon-coated Si-C composite particles and graphite particles were mixed to obtain a mixed negative electrode material. The mass ratios in the total mixed negative electrode material were 0.114 and 0.886 respectively. The battery characteristics are shown in Table 2. The battery characteristics were found to be good.

[Example 5]

The Si-C composite particles (2) obtained by the above method were subjected to C-CVD at 700°C for 16 minutes using acetylene as a carbon source to prepare carbon-coated Si-C composite particles.

The physical property values are shown in Table 1. In comparison with Example 1, R value according to the Raman spectrum was 0.83, and $I_{SiC111}/I_{Si111}$ according to XRD was 0.00 which were the same as in Example 1.

The full width at half maximum of the peak of 111 plane of Si according to XRD was 4.73 deg., which was slightly smaller than 5.02 deg. of Example 1, and the amorphous characteristic of Si was thus considered to be slightly lower than that of Example 1.

The carbon-coated Si-C composite particles and graphite particles were mixed to obtain a mixed negative electrode material. The mass ratios in the total mixed negative electrode material were 0.119 and 0.881 respectively. The battery characteristics are shown in Table 2. The battery characteristics were found to be good.

[Comparative Example 1]

The Si-C composite particles (1) obtained by the above method were subjected to C-CVD at 550°C for 60 minutes using acetylene as a carbon source to prepare carbon-coated Si-C composite particles. The physical property values are shown in Table 1.

The carbon coverage was 9%, which was found to be substantially lower than that in Examples.

The carbon-coated Si-C composite particles and graphite particles were mixed to obtain a mixed negative electrode material. The mass ratios in the total mixed negative electrode material were 0.108 and 0.892 respectively. The battery characteristics are shown in Table 2. It was found that the battery characteristics were poor, for example, the Si utilization rate and the initial coulombic efficiency were low, and the initial coulombic efficiency after storage for two months was low.

[Comparative Example 2]

The Si-C composite particles (1) obtained by the above method were not subjected to C-CVD, and the Si-C composite particles (1) and graphite particles were mixed to obtain a mixed negative electrode material. The mass ratios in the total mixed negative electrode material were 0.118 and 0.882 respectively. The physical property values of the Si-C composite particles are shown in Table 1, and the battery characteristics of the negative electrode material are shown in Table 2.

In comparison with Example 1, there was no carbonaceous layer, oxidation over time was not suppressed, and the initial coulombic efficiency after storage for two months was thus low.

[Comparative Example 3]

The Si-C composite particles (1) obtained by the above method were subjected to C-CVD at 800°C for 15 minutes using ethylene as a carbon source to prepare carbon-coated Si-C composite particles. The physical property values are shown in Table 1.

In comparison with Example 1, R value of the Raman spectrum was 1.06, suggesting that the carbonaceous layer was formed of poor quality carbon. In addition, it was suggested that the peak top of $I_{Si}$ was shifted to 518 $cm^{-1}$ and crystalline Si was formed instead of amorphous Si. Further, $I_{SiC111}/I_{Si111}$, in XRD was 0.19, suggesting the generation of SiC. Further, it is considered that since this sample was heat-treated at 800°C, the crystallites became large, and a low full width at half maximum of the peak of 111 plane of Si according to XRD of 2.20 deg. was obtained.

The carbon-coated Si-C composite particles and graphite particles were mixed to obtain a mixed negative electrode material. The mass ratios in the total mixed negative electrode material were 0.108 and 0.892 respectively. The battery characteristics are shown in Table 2. It was found that the battery characteristics such as the initial insertion specific capacity, Si utilization rate, initial coulombic efficiency were poor.

[Comparative Example 4]

The Si-C composite particles (1) obtained by the above method were subjected to C-CVD at 900°C for 15 minutes using methane as a carbon source to prepare carbon-coated Si-C composite particles. The physical property values are shown in Table 1.

The full width at half maximum of the peak of 111 plane of Si according to XRD was as small as 0.50 deg., and $I_{SiC111}/I_{Si111}$, was 1.50, suggesting an increase in the crystallite size and the generation of SiC.

The carbon-coated Si-C composite particles and graphite particles were mixed to obtain a mixed negative electrode material. The mass ratios in the total mixed negative electrode material were 0.108 and 0.892 respectively. The battery characteristics are shown in Table 2. It was found that the battery characteristics such as the initial insertion specific capacity and Si utilization rate were poor.

[Table 1]

Table 1

| | Cross-sectional SEM | | | Raman spectrum | | |
|---|---|---|---|---|---|---|
| | Thickness of carbonaceous layer | Average thickness of carbonaceous layer | Carbon coverage | R value | Si peak position | $I_{Si}/I_G$ |
| | nm | nm | % | - | cm⁻¹ | - |
| Ex. 1 | 20 - 100 | 74.5 | 100 | 0.78 | 455 | 0.01 |
| Ex. 2 | 10 - 50 | 17.2 | 100 | 0.91 | 471 | 0.05 |
| Ex. 3 | 20 - 100 | 33.1 | 100 | 0.79 | 462 | 0.01 |
| Ex. 4 | 20 - 100 | 49.7 | 100 | 0.84 | 460 | 0.01 |
| Ex. 5 | 20 - 100 | 28.0 | 100 | 0.83 | 475 | 0.02 |
| Comp. Ex. 1 | 0 - 100 | 24.0 | 9 | 0.99 | 481 | 0.12 |
| Comp. Ex. 2 | 0 | 0 | 0 | 1.13 | 463 | 0.20 |
| Comp. Ex. 3 | 20 - 100 | 25.5 | 100 | 1.06 | 518 | 0.08 |
| Comp. Ex. 4 | 10 - 100 | 20.0 | 100 | 0.95 | 520 | 0.08 |

Table 1 (continued)

| | XRD | | Physical property value | | | | | |
|---|---|---|---|---|---|---|---|---|
| | Full width at half maximum of 111 plane of Si | $I_{SiC111}/I_{Si111}$ | Si content | BET specific surface area | True density | $D_{V50}$ | Oxygen content after CVD treatment | Oxygen content after aging for two months |
| | deg. | - | mass% | m²/g | g/cm³ | μm | % by mass | % by mass |
| Ex. 1 | 5.02 | 0.00 | 45 | 1.55 | 2.10 | 9.5 | 5.2 | 5.1 |
| Ex. 2 | 4.69 | 0.00 | 47 | 2.02 | 2.10 | 9.3 | 5.2 | 5.2 |
| Ex. 3 | 6.42 | 0.00 | 43 | 2.74 | 2.10 | 7.3 | 7.6 | 7.5 |
| Ex. 4 | 3.36 | 0.00 | 46 | 1.31 | 2.10 | 9.5 | 5.6 | 5.6 |
| Ex. 5 | 4.73 | 0.00 | 45 | 3.06 | 2.10 | 6.9 | 7.7 | 7.6 |
| Comp. Ex. 1 | 6.00 | 0.00 | 48 | 2.44 | 2.10 | 9.2 | 5.8 | 10.0 |
| Comp. Ex. 2 | 6.05 | 0.00 | 48 | 3.22 | 1.92 | 8.7 | 5.3 | 10.0 |
| Comp. Ex. 3 | 2.20 | 0.19 | 47 | 1.67 | 2.10 | 9.2 | 5.1 | 5.1 |
| Comp. Ex. 4 | 0.50 | 1.50 | 45 | 1.50 | 2.10 | 7.0 | 5.0 | 5.0 |

[Table 2]

Table 2

| | | Battery characteristics | | | | | | | |
|---|---|---|---|---|---|---|---|---|---|
| | Carbon-coated Si-C mass ratio | Graphite mass ratio | Initial insertion specific capacity | Graphite initial insertion specific capacity | Carbon-coated Si-C initial insertion specific capacity | Initial insertion specific capacity of carbon in carbon-coated Si-C composite particles | Si initial insertion specific capacity | Si insertion specific capacity (theoretical value) | Si utilization rate |
| | | | mAh/g | mAh/g | mAh/g | mAh/g | mAh/g | mAh/g | % |
| Ex. 1 | 0.114 | 0.886 | 544 | 330 | 1884 | 185 | 3775 | 4200 | 89.9 |
| Ex.2 | 0.108 | 0.892 | 540 | 332 | 1928 | 178 | 3723 | 4200 | 88.6 |
| Ex. 3 | 0.119 | 0.881 | 541 | 328 | 1788 | 184 | 3732 | 4200 | 88.8 |
| Ex. 4 | 0.114 | 0.886 | 535 | 330 | 1801 | 182 | 3518 | 4200 | 83.8 |
| Ex. 5 | 0.119 | 0.881 | 534 | 328 | 1733 | 176 | 3459 | 4200 | 82.4 |
| Comp. Ex. 1 | 0.108 | 0.892 | 540 | 332 | 1928 | 172 | 3658 | 4200 | 87.1 |
| Comp. Ex. 2 | 0.118 | 0.882 | 569 | 328 | 2042 | 174 | 3892 | 4200 | 92.7 |
| Comp. Ex. 3 | 0.108 | 0.892 | 500 | 332 | 1557 | 178 | 2602 | 4200 | 61.9 |
| Comp. Ex. 4 | 0.108 | 0.892 | 450 | 332 | 1094 | 186 | 2018 | 4200 | 48.1 |

Table 2 (continued)

| | Battery characteristics | | | | |
|---|---|---|---|---|---|
| | Initial coulombic efficiency | Initial coulombic efficiency after aging storage for two months | Retention rate of initial coulombic efficiency for two months | Mass per unit area | Electrode density |
| | % | % | % | mg/cm$^2$ | g/cm$^3$ |
| Ex. 1 | 90.7 | 90.7 | 100.0 | 6.3 | 1.41 |
| Ex. 2 | 91.0 | 91.0 | 100.0 | 6.0 | 1.40 |
| Ex. 3 | 89.5 | 89.5 | 100.0 | 6.1 | 1.40 |
| Ex. 4 | 91.1 | 91.1 | 100.0 | 6.4 | 1.41 |
| Ex. 5 | 89.7 | 89.7 | 100.0 | 6.1 | 1.42 |
| Comp. Ex. 1 | 85.0 | 82.0 | 96.5 | 6.0 | 1.40 |
| Comp. Ex. 2 | 91.7 | 85.0 | 92.7 | 5.8 | 1.41 |
| Comp. Ex. 3 | 85.0 | 85.0 | 100.0 | 6.0 | 1.40 |
| Comp. Ex. 4 | 90.0 | 90.0 | 100.0 | 6.0 | 1.40 |

As can be seen from Table 2, a battery having a negative electrode mixture layer containing the carbon-coated Si-C composite particles according to an embodiment of the present invention has both a high Si utilization rate of 80.0% or more and a high initial coulombic efficiency retention rate of approximately 100.0%.

[Example 6]

[Preparation of carbon-coated Si-C composite particles]

In a horizontal tubular furnace with an inner diameter of 7 cm (manufactured by Koyo Thermo Systems Co., Ltd.), porous carbon having a BET specific surface area of 1850 m$^2$/g and a particle size of $D_{V50}$ of 9.9 um was subjected to a silane treatment with a silane gas having a silane concentration of 100% at a set temperature of 400°C, a pressure of 760 torr, and a flow rate of 65 sccm for 1.13 hours to precipitate silicon on the surface and inside of the porous carbon to obtain Si-C composite particles. Then, the silane gas was removed with Ar gas, and the mixture was replaced with an inert atmosphere. Thereafter, while raising the temperature at a temperature increasing rate of 25°C/min, an acetylene/Ar diluted gas having an acetylene concentration of 20% by volume was introduced at a flow rate of 100 sccm, and after the temperature reached 650°C, acetylene treatment (C-CVD) was performed while keeping the temperature at 650°C for 0.5 hours. Thereafter, the temperature was lowered to room temperature while flowing Ar gas to obtain a carbon-coated Si-C composite. The physical properties of the obtained carbon-coated Si-C composite particles are shown in Table 4.

[Evaluation of battery characteristics]

The obtained carbon-coated Si-C composite particles and graphite particles were mixed to obtain a mixed negative electrode material. The mass ratio of the carbon-coated Si-C composite particles and the graphite particles in the entire mixed negative electrode material and the battery characteristics thereof are shown in Table 5.

[Examples 7 to 10, Comparative Example 8]

Carbon-coated Si-C composite particles were obtained in the same manner as in Example 6 except that the porous carbon used as the raw material in Example 6 was used as a raw material after being adjusted to a porous carbon having a BET specific surface area and a particle size $D_{V50}$ shown in Table 3, and the silane treatment conditions and acetylene treatment conditions were set to the conditions shown in Table 3. The physical properties of the obtained carbon-coated Si-C composite particles are shown in Table 4.
The obtained carbon-coated Si-C composite particles and graphite particles were mixed to obtain a mixed negative electrode material. The mass ratio of the carbon-coated Si-C composite particles to the graphite particles in the entire mixed negative electrode material and the battery characteristics thereof are shown in Table 5.

[Example 11]

Carbon-coated Si-C composite particles were obtained using the porous carbon used as the raw material in Example 6, with all the silane treatment conditions and acetylene treatment conditions being the same as in Example 6.
Into 800 g of water, 150 g of flake graphite (KS-6, Timcal), 40 g of acetylene black (HS-100, Denka Company Limited) and 10 g of carboxymethyl cellulose were added, and the mixture was dispersed and mixed in a bead mill to obtain a dispersion of inorganic particles (solid content 25% by mass).
Into TIGHT BOY TB-1 (volume: 105 mL, mouth inner diameter × lid outer diameter × total height (mm): φ57 × φ67 × 60) made of polyethylene, 0.500 g of pure water and 1.067 g of a 4.5% by mass aqueous solution of pullulan were added with a micropipette, and then the mixture was mixed for 2 minutes under the condition of rotation at 1000 rpm using a rotation/revolution mixer (manufactured by THINKY CORPORATION). After adding 2.668 g of the carbon-coated Si-C composite particles to the mixture, the mixture was mixed again with a rotation/revolution mixer under the conditions of rotation at 1000 rpm for 2 minutes. Thereafter, 1.380 g of the conductive material dispersion having a solid content of 11% by mass was added to the mixture, and the mixture was mixed again with a rotation/revolution mixer under the conditions of rotation at 1000 rpm for 2 minutes. To the obtained slurry, 0.111 g of a 4.8% by mass aqueous solution of trehalose was added with a micropipette, and the mixture was mixed again with a rotation/revolution mixer under the conditions of rotation at 1000 rpm for 2 minutes. The obtained mixed slurry was dried for 5 hours on a hot plate covered with a Teflon® sheet and kept warm at 110°C. The dried solid matter was collected and disintegrated in a mortar to obtain a polymer-coated carbon-coated Si-C composite. The polymer content was 2.0% by mass. The physical properties of the obtained polymer-coated carbon-coated Si-C composite particles are shown in Table 4.
The obtained polymer-coated carbon-coated Si-C composite particles and graphite particles were mixed to obtain a mixed negative electrode material. The mass ratio of the polymer-coated carbon-coated Si-C composite particles to the graphite particles in the entire mixed negative electrode material and the battery characteristics thereof are shown in Table 5.

[Example 12]

Carbon-coated Si-C composite particles were obtained using the porous carbon used as the raw material in Example 6, with all the silane treatment conditions and acetylene treatment conditions being the same as in Example 6.
Into 800 g of water, 150 g of flake graphite (KS-6, Timcal), 40 g of acetylene black (HS-100, Denka Company Limited) and 10 g of carboxymethyl cellulose were added, and the mixture was dispersed and mixed in a bead mill to obtain a dispersion of inorganic particles (solid content 25% by mass).
Into TIGHT BOY TB-1 (volume: 105 mL, mouth inner diameter × lid outer diameter × total height (mm): φ57 × φ67 × 60) made of polyethylene, 0.500 g of pure water and 1.068 g of a 4.5% by mass aqueous solution of tamarind seed gum were added with a micropipette, and then the mixture was mixed for 2 minutes under the condition of rotation at 1000 rpm using a rotation/revolution mixer (manufactured by THINKY CORPORATION). After adding 2.667 g of the carbon-coated Si-C composite particles to the mixture, the mixture was mixed again with a rotation/revolution mixer under the conditions of rotation at 1000 rpm for 2 minutes. Thereafter, 1.382 g of the dispersion of the inorganic particles having a solid content of 11% by mass was added to the mixture, and the mixture was mixed again with a rotation/revolution mixer under the conditions of rotation at 1000 rpm for 2 minutes. To the obtained slurry, 0.113 g of a 4.8% by mass aqueous solution of sorbitol was added with a micropipette, and the mixture was mixed again with a rotation/revolution mixer under the conditions of rotation at 1000 rpm for 2 minutes. The obtained mixed slurry was dried for 5 hours on a hot plate covered with a Teflon® sheet and kept warm at 110°C. The dried solid matter was collected and disintegrated in a mortar to obtain polymer-coated carbon-coated Si-C composite particles. The polymer content was 2.1% by mass. The physical properties of the obtained polymer-coated carbon-coated Si-C composite particles are shown in Table 4.
The obtained polymer-coated carbon-coated Si-C composite particles and graphite particles were mixed to obtain a mixed negative electrode material. The mass ratio of the polymer-coated carbon-coated Si-C composite particles to the graphite particles in the entire mixed negative electrode material and the battery characteristics thereof are shown in Table 5.

[Example 13]

Carbon-coated Si-C composite particles were obtained using the porous carbon used as the raw material in Example 6, with all the silane treatment conditions and acetylene treatment conditions being the same as in Example 6.
Into 800 g of water, 150 g of flake graphite (KS-6, Timcal), 40 g of acetylene black (HS-100, Denka Company Limited) and 10 g of carboxymethyl cellulose were added, and the mixture was dispersed and mixed in a bead mill to obtain a dispersion of inorganic particles (solid content 25% by mass).
Into TIGHT BOY TB-1 (volume: 105 mL, mouth inner diameter × lid outer diameter × total height (mm): φ57 × φ67 × 60) made of polyethylene, 0.500 g of pure water and 1.065 g of a 4.5% by mass aqueous solution of pectin were added with a micropipette, and then the mixture was mixed for 2 minutes under the condition of rotation at 1000 rpm using a rotation/revolution mixer (manufactured by THINKY CORPORATION). After adding 2.662 g of the carbon-coated Si-C composite particles to the mixture, the mixture was mixed again with a rotation/revolution mixer under the conditions of rotation at 1000 rpm for 2 minutes. Thereafter, 1.378 g of the dispersion of the inorganic particles having a solid content of 11% by mass was added to the mixture, and the mixture was mixed again with a rotation/revolution mixer under the conditions of rotation at 1000 rpm for 2 minutes. To the obtained slurry, 0.108 g of a 4.8% by mass aqueous solution of sorbitol was added with a micropipette, and the mixture was mixed again with a rotation/revolution mixer under the conditions of rotation at 1000 rpm for 2 minutes. The obtained mixed slurry was dried for 5 hours on a hot plate covered with a Teflon® sheet and kept warm at 110°C. The dried solid matter was collected and disintegrated in a mortar to obtain polymer-coated carbon-coated Si-C composite particles. The polymer content was 1.9% by mass. The physical properties of the obtained polymer-coated carbon-coated Si-C composite particles are shown in Table 4.
The obtained polymer-coated carbon-coated Si-C composite particles and graphite particles were mixed to obtain a mixed negative electrode material. The mass ratio of the polymer-coated carbon-coated Si-C composite particles to the graphite particles in the entire mixed negative electrode material and the battery characteristics thereof are shown in Table 5.

[Comparative Examples 5 to 7]

The porous carbon having a BET specific surface area and particle size $D_{V50}$ shown in Table 3 was subjected to silane treatment under the conditions shown in Table 3 to precipitate silicon on the surfaces and inside of the porous carbon, thereby obtaining Si-C composite particles. The physical properties of the obtained Si-C composite particles are shown in Table 4.
The obtained Si-C composite particles and graphite particles were mixed to obtain a mixed negative electrode material. The mass ratio of the Si-C composite particles to the graphite particles in the entire mixed negative electrode material and the battery characteristics thereof are shown in Table 5.

[Table 3]

Table 3

| | Raw material (porous carbon) | | Silane treatment condition | | | | |
|---|---|---|---|---|---|---|---|
| | Raw material BET | D$_{V50}$ | Silane concentration | Setting temperature | Pressure | Flow rate | Silane treatment time |
| | m²/g | μm | % | °C | torr | sccm | h |
| Ex. 6 | 1850 | 9.9 | 100 | 400 | 760 | 65 | 1.13 |
| Ex. 7 | 1550 | 10.0 | 100 | 400 | 760 | 65 | 1.00 |
| Ex. 8 | 1950 | 9.2 | 100 | 400 | 760 | 65 | 1.27 |
| Ex. 9 | 1800 | 12.0 | 17.4 | 400 | 760 | 230 | 2.50 |
| Ex. 10 | 1850 | 11.2 | 100 | 400 | 760 | 65 | 1.08 |
| Ex. 11 | 1850 | 9.9 | 100 | 400 | 760 | 65 | 1.13 |
| Ex. 12 | 1850 | 9.9 | 100 | 400 | 760 | 65 | 1.13 |
| Ex. 13 | 1850 | 9.9 | 100 | 400 | 760 | 65 | 1.13 |
| Comp. Ex. 5 | 1700 | 7.0 | 100 | 400 | 760 | 65 | 1.20 |
| Comp. Ex. 6 | 1700 | 7.0 | 100 | 400 | 760 | 65 | 1.00 |
| Comp. Ex. 7 | 1700 | 7.0 | 100 | 400 | 760 | 65 | 1.10 |
| Comp. Ex. 8 | 1850 | 11.6 | 100 | 400 | 760 | 65 | 1.00 |

Table 3 (continued)

| | Acetylene treatment condition | | |
|---|---|---|---|
| | Acetylene concentration | Acetylene/Ar flow rate | Acetylene/Ar treatment time |
| | % | sccm | h |
| Ex. 6 | 20 | 100 | 0.5 |
| Ex. 7 | 20 | 100 | 0.5 |
| Ex. 8 | 20 | 100 | 0.5 |
| Ex. 9 | 20 | 100 | 1.0 |
| Ex. 10 | 20 | 100 | 0.5 |
| Ex. 11 | 20 | 100 | 0.5 |
| Ex. 12 | 20 | 100 | 0.5 |
| Ex. 13 | 20 | 100 | 0.5 |
| Comp. Ex. 5 | - | - | - |
| Comp. Ex. 6 | - | - | - |
| Comp. Ex. 7 | - | - | - |
| Comp. Ex. 8 | 20 | 100 | 0.5 |

[Table 4]

Table 4

| | Cross-sectional SEM | Raman spectrum | | | XRD | |
|---|---|---|---|---|---|---|
| | Carbon coverage | R value | Si peak position | $I_{Si}/I_G$ | Full width at half maximum of 111 plane of Si | $I_{SiC111}/I_{Si111}$ |
| | % | - | cm$^{-1}$ | - | deg. | - |
| Ex. 6 | 100 | 1.07 | 457 | 0.06 | 4.91 | 0.00 |
| Ex. 7 | 100 | 1.00 | 454 | 0.05 | 4.82 | 0.00 |
| Ex. 8 | 100 | 1.09 | 467 | 0.07 | 5.80 | 0.00 |
| Ex. 9 | 100 | 1.07 | 459 | 0.05 | 4.83 | 0.00 |
| Ex. 10 | 100 | 1.08 | 458 | 0.06 | 4.73 | 0.00 |
| Ex. 11 | 100 | 1.06 | 457 | 0.05 | 4.89 | 0.00 |
| Ex. 12 | 100 | 1.05 | 457 | 0.05 | 4.87 | 0.00 |
| Ex. 13 | 100 | 1.06 | 457 | 0.04 | 4.88 | 0.00 |
| Comp. Ex. 5 | 0 | 1.11 | 470 | 0.18 | 5.96 | 0.00 |
| Comp. Ex. 6 | 0 | 1.15 | 466 | 0.08 | 11.70 | 0.00 |
| Comp. Ex. 7 | 0 | 1.14 | 466 | 0.08 | 7.36 | 0.00 |
| Comp. Ex. 8 | 100 | 1.08 | 452 | 0.05 | 4.30 | 0.00 |

Table 4 (continued)

| | Physical property value | | | | | | |
|---|---|---|---|---|---|---|---|
| | Si content | BET specific surface area | Pore volume | $D_{V50}$ | True density | Oxygen content after CVD treatment | Oxygen content after aging for two months |
| | mass% | m²/g | cm³/g | μm | g/cm3 | % by mass | % by mass |
| Ex. 6 | 45 | 46.5 | 0.023 | 9.9 | 2.15 | 2.6 | 2.8 |
| Ex. 7 | 39 | 5.7 | 0.008 | 10.0 | 2.12 | 1.1 | 1.2 |
| Ex. 8 | 46 | 167.7 | 0.082 | 9.2 | 2.13 | 5.6 | 5.6 |
| Ex. 9 | 47 | 103.6 | 0.054 | 12.0 | 2.10 | 1.4 | 1.5 |
| Ex. 10 | 44 | 89.4 | 0.043 | 11.2 | 2.14 | 3.3 | 3.5 |
| Ex. 11 | 42 | 35.5 | 0.017 | 9.9 | 2.06 | 3.8 | 3.8 |
| Ex. 12 | 42 | 30.2 | 0.014 | 9.9 | 2.08 | 3.8 | 3.9 |
| Ex. 13 | 42 | 20.4 | 0.010 | 9.9 | 2.07 | 3.8 | 3.9 |
| Comp. Ex. 5 | 48 | 5.4 | 0.013 | 7.2 | 1.92 | 1.1 | 3.1 |
| Comp. Ex. 6 | 46 | 28.6 | 0.042 | 7.5 | 2.00 | 9.2 | 12.0 |
| Comp. Ex. 7 | 45 | 20.7 | 0.034 | 7.5 | 1.93 | 4.8 | 7.0 |
| Comp. Ex. 8 | 41 | 285.9 | 0.132 | 11.6 | 2.13 | 4.9 | 5.0 |

[Table 5]

Table 5

| | Negative electrode material | | Battery characteristics | | | |
|---|---|---|---|---|---|---|
| | Carbon-coated Si-C mass ratio | Graphite mass ratio | Initial insertion specific capacity | Graphite initial insertion specific capacity | Carbon-coated Si-C initial insertion specific capacity | Initial insertion specific capacity of carbon in carbon-coated Si-C composite particles |
| | - | - | mAh/g | mAh/g | mAh/g | mAh/g |
| Ex. 6 | 0.120 | 0.880 | 552 | 327 | 1875 | 195 |
| Ex. 7 | 0.138 | 0.862 | 551 | 320 | 1665 | 223 |
| Ex. 8 | 0.117 | 0.883 | 547 | 328 | 1862 | 180 |
| Ex. 9 | 0.115 | 0.885 | 560 | 329 | 2007 | 192 |
| Ex. 10 | 0.123 | 0.877 | 547 | 326 | 1796 | 196 |
| Ex. 11 | 0.129 | 0.871 | 547 | 324 | 1727 | 202 |
| Ex. 12 | 0.129 | 0.871 | 548 | 324 | 1737 | 201 |
| Ex. 13 | 0.129 | 0.871 | 546 | 324 | 1723 | 201 |
| Comp. Ex. 5 | 0.113 | 0.888 | 567 | 330 | 2102 | 189 |
| Comp. Ex. 6 | 0.117 | 0.883 | 561 | 328 | 1982 | 167 |
| Comp. Ex. 7 | 0.120 | 0.880 | 557 | 327 | 1917 | 187 |
| Comp. Ex. 8 | 0.132 | 0.868 | 534 | 323 | 1599 | 201 |

Table 5 (continued)

| | Battery characteristics | | | | | | | |
|---|---|---|---|---|---|---|---|---|
| | Si initial insertion specific capacity | Si insertion specific capacity (theoretical value) | Si utilization rate | Initial coulombic efficiency | Initial coulombic efficiency after aging storage for two months | Retention rate of initial coulombic efficiency for two months | Mass per unit area | Electrode density |
| | mAh/g | mAh/g | % | % | % | % | mg/cm$^2$ | g/cm$^3$ |
| Ex. 6 | 3734 | 4200 | 88.9 | 87.2 | 87.1 | 99.9 | 6.2 | 1.44 |
| Ex. 7 | 3699 | 4200 | 88.1 | 88.0 | 87.9 | 99.9 | 6.3 | 1.43 |
| Ex. 8 | 3657 | 4200 | 87.1 | 86.7 | 86.7 | 100.0 | 6.2 | 1.41 |
| Ex. 9 | 3862 | 4200 | 92.0 | 88.9 | 88.8 | 99.9 | 6.0 | 1.41 |
| Ex. 10 | 3637 | 4200 | 86.6 | 86.6 | 86.4 | 99.8 | 6.2 | 1.44 |
| Ex. 11 | 3632 | 4200 | 86.5 | 89.5 | 89.5 | 100.0 | 6.2 | 1.41 |
| Ex. 12 | 3657 | 4200 | 87.1 | 89.6 | 89.6 | 100.0 | 6.1 | 1.42 |
| Ex. 13 | 3624 | 4200 | 86.3 | 89.5 | 89.5 | 100.0 | 6.1 | 1.41 |
| Comp. Ex. 5 | 3984 | 4200 | 94.9 | 92.2 | 90.2 | 97.8 | 5.8 | 1.41 |
| Comp. Ex. 6 | 3947 | 4200 | 94.0 | 89.4 | 87.3 | 97.7 | 6.0 | 1.41 |
| Comp. Ex. 7 | 3846 | 4200 | 91.6 | 90.4 | 88.7 | 98.1 | 5.9 | 1.44 |
| Comp. Ex. 8 | 3410 | 4200 | 81.2 | 84.8 | 84.7 | 99.9 | 6.5 | 1.42 |

From the above results, it was found that in all of Examples 6 to 13, the oxygen content of the composite particles did not significantly increase even after two months, and oxidation was suppressed, and in all of the battery characteristics, the Si utilization rate was high, the initial coulombic efficiency was sufficient to exceed 86%, and the equivalent initial coulombic efficiency was maintained even after aging storage for two months.

On the other hand, in Comparative Examples 5 to 7, oxidation over time occurred and the initial coulombic efficiency after aging storage for two months deteriorated. Further, in Comparative Example 8, the BET specific surface area of the carbon-coated Si-C composite particles was too high, so that the initial coulombic efficiency was insufficient.

Industrial Applicability

The carbon-coated Si-C composite particles of the present invention can be suitably used as a negative electrode active material forming a negative electrode mixture layer of, for example, a lithium-ion secondary battery. The lithium-ion secondary battery of the present invention can be suitably used for applications requiring high capacity and high output, such as IT devices such as smartphones and tablet PCs, vacuum cleaners, electric tools, electric bicycles, drones, and automobiles.

**Claims**

1. Carbon-coated Si-C composite particles comprising:

    Si-C composite particles containing a carbon material and silicon; and
    a carbonaceous layer present on surfaces of the Si-C composite particles,

wherein a coverage (carbon coverage) by the carbonaceous layer on the surfaces of the Si-C composite particles is 70% or more,

wherein a BET specific surface area is 200 m$^2$/g or less;

wherein R value ($I_D/I_G$) is 0.30 or more and 1.10 or less, and $I_{Si}/I_G$ is 0.15 or less when a peak attributed to Si is present at 450 to 495 cm$^{-1}$ and an intensity of the peak is defined as $I_{Si}$, in a Raman spectrum of the carbon-coated Si-C composite particles; and

wherein a full width at half maximum of a peak of a 111 plane of Si is 3.00 deg. or more, and (peak intensity of a 111 plane of SiC)/(peak intensity of the 111 plane of Si) is 0.01 or less, in a XRD pattern measured by powder XRD using a Cu-K$\alpha$ ray of the carbon-coated Si-C composite particles.

2. The carbon-coated Si-C composite particles according to claim 1, wherein a true density as measured by a He pycnometer is 2.00 to 2.20 g/cm$^3$.

3. The carbon-coated Si-C composite particles according to claim 1 or 2, wherein a 50% particle size $D_{V50}$ in a volume-based cumulative particle size distribution is 2.0 to 30.0 um.

4. The carbon-coated Si-C composite particles according to any one of claims 1 to 3, wherein a content of silicon is 20 to 70% by mass.

5. The carbon-coated Si-C composite particles according to any one of claims 1 to 4, wherein an oxygen content is 10.0% by mass or less.

6. The carbon-coated Si-C composite particles according to any one of claims 1 to 5, wherein an oxygen content is 4.0% by mass or less.

7. The carbon-coated Si-C composite particles according to any one of claims 1 to 6, wherein the carbonaceous layer has an average thickness of 5 to 100 nm.

8. The carbon-coated Si-C composite particles according to any one of claims 1 to 7, wherein R value ($I_D/I_G$) is 0.30 or more and less than 1.00.

9. The carbon-coated Si-C composite particles according to any one of claims 1 to 8, wherein a BET specific surface area is 6.0 m$^2$/g or less.

10. The carbon-coated Si-C composite particles according to any one of claims 1 to 8, wherein a BET specific surface area is 5.0 to 200.0 m$^2$/g.

11. A polymer-coated carbon-coated Si-C composite particles comprising:
a polymer coating layer on at least a part of the surfaces of the carbon-coated Si-C composite particles according to any one of claims 1 to 10,
wherein the polymer coating layer comprises inorganic particles comprising one or more selected from graphite and carbon black and a polymer, and a polymer content is 0.1 to 10.0% by mass.

12. A method for producing carbon-coated Si-C composite particles comprising:

a step (A) of allowing a silicon-containing gas to act on porous carbon to precipitate silicon in pores and on a surface of the porous carbon to obtain Si-C composite particles; and
a step (B) of forming a carbonaceous layer on surfaces of the Si-C composite particles by a chemical vapor deposition (CVD) method at 600 to 750°C using at least one selected from acetylene and ethylene as a carbon source.

13. The method for producing carbon-coated Si-C composite particles according to claim 12, wherein the step (A) and the step (B) are continuously performed.

14. The method for producing carbon-coated Si-C composite particles according to claim 12 or 13, wherein the carbon-coated Si-C composite particles according to any one of claims 1 to 10 are produced.

15. A negative electrode mixture layer comprising the carbon-coated Si-C composite particles according to any one of claims 1 to 10.

**16.** A negative electrode mixture layer comprising the polymer-coated carbon-coated Si-C composite particles according to claim 11.

**17.** A lithium-ion secondary battery comprising the negative electrode mixture layer according to claim 15 or 16.

[Fig. 1]

（a）

（b）

[Fig. 2]

(a)

EXAMPLE 1

(b)

EXAMPLE 4

(c)

COMPARATIVE EXAMPLE 3

[Fig. 3]

[Fig. 4]

## INTERNATIONAL SEARCH REPORT

| International application No. |
| --- |
| PCT/JP2021/020500 |

**A. CLASSIFICATION OF SUBJECT MATTER**
C01B 33/029(2006.01)i; H01M 4/36(2006.01)i; H01M 4/38(2006.01)i; C01B 32/00(2017.01)i
FI: H01M4/36 C; H01M4/38 Z; H01M4/36 A; H01M4/36 E; C01B33/029; C01B32/00
According to International Patent Classification (IPC) or to both national classification and IPC

**B. FIELDS SEARCHED**

Minimum documentation searched (classification system followed by classification symbols)
C01B33/029; H01M4/36; H01M4/38; C01B32/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
JSTPlus (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2018-534720 A (ENERG2 TECHNOLOGIES, INC.) 22 November 2018 (2018-11-22) paragraphs [0160], [0408]-[0412] | 12–13 |
| A | paragraphs [0160], [0408]-[0412] | 1–11, 14–17 |
| A | WO 2019/031597 A1 (SHOWA DENKO KABUSHIKI KAISHA) 14 February 2019 (2019-02-14) paragraphs [0074]-[0079], table 3 | 1–17 |
| A | JP 2018-163776 A (PANASONIC IP MANAGEMENT CO., LTD.) 18 October 2018 (2018-10-18) paragraphs [0077]-[0092] | 1–17 |
| A | JP 2005-025991 A (JAPAN STORAGE BATTERY CO., LTD.) 27 January 2005 (2005-01-27) paragraphs [0071]-[0110], table 7 | 1–17 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 July 2021 (05.07.2021) | 20 July 2021 (20.07.2021) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

International application No.

PCT/JP2021/020500

| Patent Documents referred in the Report | Publication Date | Patent Family | Publication Date |
|---|---|---|---|
| JP 2018-534720 A | 22 Nov. 2018 | US 2017/0170477 A1 paragraphs [0204], [0458]-[0459] EP 3341990 A1 CN 108475779 A KR 10-2018-0113187 A | |
| WO 2019/031597 A1 | 14 Feb. 2019 | EP 3667782 A1 paragraphs [0100]-[0106], table 3 KR 10-2019-0132545 A CN 110998927 A | |
| JP 2018-163776 A | 18 Oct. 2018 | (Family: none) | |
| JP 2005-025991 A | 27 Jan. 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018534720 A